(19) **Europäisches Patentamt / European Patent Office / Office européen des brevets**

(11) **EP 2 993 946 B1**

(12) **EUROPEAN PATENT SPECIFICATION**

(45) Date of publication and mention of the grant of the patent:
**02.05.2018 Bulletin 2018/18**

(51) Int Cl.:
*H04W 52/02* (2009.01)   *H04W 52/14* (2009.01)
*H04W 52/28* (2009.01)   *H04W 52/04* (2009.01)
*H04W 52/44* (2009.01)   *H04W 52/22* (2009.01)
*H04W 52/24* (2009.01)

(21) Application number: **14791442.8**

(22) Date of filing: **14.01.2014**

(86) International application number:
**PCT/CN2014/070620**

(87) International publication number:
**WO 2014/176940 (06.11.2014 Gazette 2014/45)**

(54) **POWER CONTROL METHOD AND DEVICE, BASE STATION AND COMPUTER STORAGE MEDIUM**

LEISTUNGSSTEUERUNGSVERFAHREN UND VORRICHTUNG, BASISSTATION UND COMPUTERSPEICHERMEDIUM

PROCÉDÉ ET DISPOSITIF DE COMMANDE DE PUISSANCE, STATION DE BASE ET SUPPORT DE STOCKAGE INFORMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.04.2013 CN 201310157560**

(43) Date of publication of application:
**09.03.2016 Bulletin 2016/10**

(73) Proprietor: **ZTE Corporation**
Shenzhen, Guangdong 518057 (CN)

(72) Inventors:
• **YU, Qingqi**
Shenzhen
Guangdong 518057 (CN)
• **LI, Jun**
Shenzhen
Guangdong 518057 (CN)
• **YOU, Aimin**
Shenzhen
Guangdong 518057 (CN)
• **YUAN, Weitao**
Shenzhen
Guangdong 518057 (CN)

(74) Representative: **Lavoix**
**Bayerstrasse 83**
**80335 München (DE)**

(56) References cited:
WO-A1-2012/048717    CN-A- 101 136 666
CN-A- 102 281 621    CN-A- 102 655 486
US-A1- 2007 201 350    US-A1- 2008 205 318

• "3rd Generation Partnership Project;Technical Specification Group Radio Access Network;Continuous Connectivity for Packet Data Users;(Release 7)", 3GPP DRAFT; R1-051293_TR25903_V0.1.0_CONCON, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Diego, USA; 20051031, 31 October 2005 (2005-10-31), XP050100875, [retrieved on 2005-10-31]
• QUALCOMM INCORPORATED: "TP on Simulation Assumptions and DCH Enhancements", 3GPP DRAFT; R1-131586_TP ON SIMULATION ASSUMPTIONS AND DCH ENHANCEMENTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG1, no. Chicago, USA; 20130415 - 20130419 7 April 2013 (2013-04-07), XP050697416, Retrieved from the Internet: URL:http://www.3gpp.org/ftp/tsg_ran/WG1_RL 1/TSGR1_72b/Docs/ [retrieved on 2013-04-07]

**Description**

**TECHNICAL FIELD**

The disclosure relates to a power control technology in the field of communication, and in particular to a power control method and device, a base station and a computer storage medium.

**BACKGROUND**

For a current Universal Mobile Telecommunication System (UMTS), data services rapidly increase and problems about air interface capacity of cells become increasingly conspicuous. The key problem in UMTS researches is how to improve a power control mechanism of a UMTS to maximally reduce transmitting power of a terminal so as to reduce uplink interference and further improve uplink capacity of the system as well as standby time of the terminal on the premise of ensuring quality of service required by the terminal.

3GPP DRAFT R1-051293 discloses that when detecting the inactivity condition in the UL, the serving Node B reduces the target SIR for the UL power control from the last RNC-configured value to a pre-determined target value (for reliable TPC detection).

US2007/0201350A1 discloses a micro-sleep mode of a UE. If the UE determines it is not scheduled during a TTI, it may shut down parts of its transmitter and receiver chain for the remaining of the TTI and turn them back on again in time to receive the control channel of the next TTL. This enables the UE to conserve battery power.

WO2012/048717A1 discloses a method of providing a regular micro sleep mode in which the receiver component is switched off after the first sub-frame portion has been decoded in case the decoding indicates that the second sub-frame portion does not need to be decoded, and an extended micro sleep mode in which the receiver component is switched off immediately after the first sub-frame portion has been received, evaluating a mode setting criterion, and controlling the receiver to enter the regular micro sleep mode or the extended micro sleep mode depending on the mode setting criterion. 3GPP DRAFT R1-131586 discloses a method of Uplink Frame Early Termination (FET). UL FET allows for termination of UL transmission and reception upon successful decoding of UL transport block at Node-B. The Node-B receiver attempts to decode UL transport block at multiple occasion with each TTI, prior to complete reception of the transport block. Upon successful decoding, Node-B sends an ACK signal, allowing the UE to terminate (DTX) its UL DPDCH transmission. The UL DPPCH carries TPC bits required for DL DCH transmission, hence UL DPCCH continues to be transmitted until the DL DCH transmission has also decoded early, after which UL DPCCH can be also be terminated.

**SUMMARY**

The embodiments of the disclosure provide a power control method and device, a base station and a computer storage medium, so as to reduce unnecessary transmitting power consumption of a terminal.

An embodiment of the disclosure provides a power control method performed by a base station, which includes:

at an end of a first part of slots of a current Transmission Time Interval (TTI), it is determined whether transmitting power of an uplink channel of a terminal is allowed to be reduced in subsequent slots of the current TTI according to first data, received in the first part of slots of the TTI, of the uplink channel of the terminal at the end of the first part of slots of the current TTI,; and if YES, the terminal is controlled to reduce the transmitting power of the uplink channel of the terminal before the end of a first slot in the subsequent slots; and the determining whether transmitting power of an uplink channel of a terminal is allowed to be reduced in subsequent slots of the current TTI according to first data comprises: determining whether the first data includes uplink HS-DPCCH ACK domain data for the HSDPA data when the HSDPA data has been transmitted to the terminal in the first part of slots at the end of the first part of slots.

In an embodiment, the first slot is earlier than the last slot of the TTI, and the controlling step may include:

the terminal is controlled to reduce the transmitting power of the uplink channel of the terminal before the end of the first slot and to increase the transmitting power of the uplink channel of the terminal after the first slot and before the end of the TTI.

In an embodiment, the first data includes data of an uplink control channel of the terminal, and the determining step may include:

it is determined whether there is transmission performed on an uplink data channel of the terminal in the TTI according to the data of the uplink control channel of the terminal at the end of the first part of slots, and if NO, it is determined that transmitting power of the uplink channel of the terminal is allowed to be reduced in subsequent slots of the current TTI.

In an embodiment, the first data includes the data of the uplink control channel of the terminal and data of the uplink data channel of the terminal, and the determining step may include:

it is determined whether the data of the uplink data channel of the terminal is successfully decoded according to the first data at the end of the first part of slots, and if YES, it is determined that transmitting power of the uplink channel of the terminal is allowed to be reduced in subsequent slots of the current TTI.

In an embodiment, the determining step may include:

it is determined whether there is transmission performed on the uplink data channel of the terminal in the TTI according to the data of the uplink control channel of the terminal at the end of the first part of slots; and

the data of the uplink data channel of the terminal is decoded when there is transmission performed on the uplink data channel of the terminal in the TTI, and when decoding is successful, it is determined that transmitting power of the uplink channel of the terminal is allowed to be reduced in subsequent slots of the current TTI.

In an embodiment, the method may further include:

it is determined whether data, received in the first P slots in the first part of slots, of the uplink data channel of the terminal is successfully decoded according to data, received in the first P slots, of the uplink channel of the terminal at the end of the first P slots, the terminal is controlled to reduce the transmitting power of the uplink channel of the terminal before the end of a second slot of the TTI if YES, and if NO, performing the determining step,

wherein P is a natural number, and is smaller than the number of slots in the first part of slots, and the second slot is earlier than the first slot.

In an embodiment, after determining that transmitting power of the uplink channel of the terminal is allowed to be reduced in subsequent slots of the current TTI, the method may further include:

it is determined whether a downlink channel feedback indicator is required to be received; and

if No, performing the controlling step before the end of the first slot; and

if YES, the downlink channel feedback indicator is received before the end of the first slot.

In an embodiment, the controlling step may include:

the terminal is controlled to reduce the transmitting power of the uplink channel of the terminal before the end of the first slot and after a downlink channel feedback indicator is received.

Whether the transmitting power of the uplink channel of the terminal is allowed to be reduced in the subsequent slots of the TTI is determined according to the first data at the end of the first part of slot, and if YES, the downlink channel feedback indicator is received before the first slot when the downlink channel feedback indicator is required to be received before the end of the first slot.

In an embodiment, at the end of the first slot, the method may further include:

the terminal is controlled to increase the transmitting power of the uplink channel of the terminal before a downlink channel feedback indicator is transmitted.

An embodiment of the disclosure further provides a base station, comprising a power control device, wherein the power control device comprises:

a first determination module, configured to determine whether transmitting power of an uplink channel of a terminal is allowed to be reduced in subsequent slots of a current TTI according to first data, received in a first part of slots of the TTI, of the uplink channel of the terminal at an end of the first part of slots of the current TTI; and the first determination module, further configured to determine that transmitting power of the uplink channel of the terminal is allowed to be reduced in subsequent slots of the current TTI, if the first data includes uplink HS-DPCCH ACK domain data for the HSDPA data when the HSDPA data has been transmitted to the terminal in the first part of slots at the end of the first part of slots; and

the first control module, configured to control the terminal to reduce the transmitting power of the uplink channel of the terminal before the end of the first slot in the subsequent slots, if the first determination module determines that transmitting power of the uplink channel of the terminal is allowed to be reduced in subsequent slots of the current TTI.

In an embodiment, the first slot is earlier than the last slot of the TTI, and the first control module is configured to control the terminal to reduce the transmitting power of the uplink channel of the terminal before the end of the first slot and to increase the transmitting power of the uplink channel of the terminal after the first slot and before the end of the TTI.

In an embodiment, the first data includes data of an uplink control channel of the terminal, and the first determination module is configured to determine whether there is transmission performed on an uplink data channel of the terminal in the TTI according to the data of the uplink control channel of the terminal at the end of the first part of slots, and if NO, determine that transmitting power of the uplink channel of the terminal is allowed to be reduced in subsequent slots of the current TTI.

In an embodiment, the first data includes data of an uplink control channel of the terminal and data of the uplink data channel of the terminal, and the first determination module is configured to determine whether the data of the uplink data channel of the terminal is successfully decoded according to the first data at the end of the first part of slots, and if YES, determine that transmitting power of the uplink channel of the terminal is allowed to be reduced in subsequent slots of the current TTI.

In an embodiment, when it is determined that the transmitting power of the uplink channel of the terminal is allowed to be reduced in the subsequent slots of the TTI according to the first data at the end of the first part of slots,,the first determination module is further configured to determine whether a downlink channel feedback indicator is required to be received, and if YES,

receive the downlink channel feedback indicator before the end of the first slot and, and

the first control module is configured to control the terminal to reduce the transmitting power of the uplink channel of the terminal before the end of the first slot in the subsequent slots if it is determined that downlink channel feedback indicator is not required to be received.

In an embodiment, the first control module is configured to control the terminal to reduce the transmitting power of the uplink channel of the terminal before the end of the first slot and after a downlink channel feedback indicator is received.

In an embodiment, the device further includes:

a second control module, configured to, at the end of the first slot, control the terminal to increase the transmitting power of the uplink channel of the terminal before the downlink channel feedback indicator is transmitted.

An embodiment of the disclosure further provides a computer storage medium, in which a computer-executable instruction is stored, wherein the computer-executable instruction is configured to execute the abovementioned power control method.

As can be seen, the embodiments of the disclosure at least have the following beneficial effect:

at the end of the first part of slots of the current TTI, whether the transmitting power of the uplink channel of the terminal is allowed to be reduced in the subsequent slots of the TTI is determined according to the first data, received in the first part of slots, of the uplink channel of the terminal, and if YES, the terminal is controlled to reduce the transmitting power of the uplink channel of the terminal before the end of the first slot in the subsequent slots, so that unnecessary transmitting power consumption of the terminal is reduced.

## BRIEF DESCRIPTION OF THE DRAWINGS

Fig. 1 is a flowchart of a power control method according to an aspect of the disclosure;
Fig. 2 is a flowchart of a channel advanced decoding-based UMTS power control method according to an aspect of the disclosure;
Fig. 3 shows a Transport Format Combination Indicator (TFCI) coding characteristic of an uplink Dedicated Physical Control Channel (DPCCH);
Fig. 4 shows an advanced decoding characteristic of an uplink Dedicated Physical Data Channel (DPDCH);
Fig. 5 is a diagram of an uplink DPCCH empty packet advanced detection-based power control method;
Fig. 6 is a flowchart of uplink DPCCH empty packet advanced detection-based power control;
Fig. 7 is a diagram of an uplink Enhanced Dedicated Physical Control Channel (E-DPCCH) empty packet advanced detection-based power control method;
Fig. 8 is a flowchart of uplink E-DPCCH empty packet advanced detection-based power control;
Fig. 9 is a diagram of an uplink DPDCH advanced decoding-based power control method;
Fig. 10 is a flowchart of uplink DPDCH advanced decoding-based power control;
Fig. 11 is a diagram of an uplink High Speed Dedicated Physical Control Channel (HS-DPCCH) Acknowledgement (ACK) domain empty packet detection-based power control method;
Fig. 12 is a flowchart of uplink HS-DPCCH ACK domain empty packet detection-based power control; and
Fig. 13 is a diagram of a channel advanced decoding-based UMTS power control device.

## DETAILED DESCRIPTION

In order to make clearer a purpose, technical solutions and advantages of the embodiment of the disclosure, the embodiment of the disclosure is described below with reference to the drawings and specific embodiments in detail.

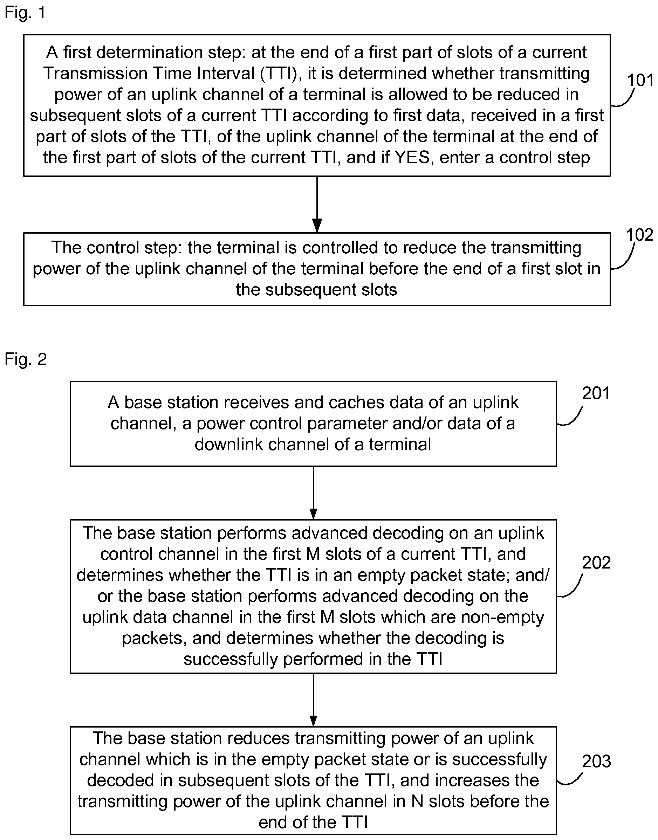

Fig. 1 is a flowchart of a power control method according to an aspect of the disclosure. As shown in Fig. 1, the disclosure provides a power control method, which may be adopted for a UMTS base station, the method including the following steps:

Step 101, a first determination step: at the end of a first part of slots of a current Transmission Time Interval (TTI), it is determined whether transmitting power of an uplink channel of a terminal is allowed to be reduced in subsequent slots of a current TTI according to first data, received in a first part of slots of the TTI, of the uplink channel of the terminal at the end of the first part of slots of the current TTI, and if YES, enter a control step; and
Step 102, the control step: the terminal is controlled to reduce the transmitting power of the uplink channel of the terminal before the end of a first slot in the subsequent slots.

As can be seen, whether the transmitting power of the uplink channel of the terminal is allowed to be reduced in the subsequent slots of the TTI is determined according to the first data, received in the first part of slots, of the uplink channel of the terminal at the end of the first part of slots of the current TTI, and if YES, the terminal is controlled to reduce the transmitting power of the uplink channel of the terminal before the end of the first slot in the subsequent slots, so that unnecessary transmitting power consumption of the terminal is reduced.
Furthermore, the aspect of the disclosure improves uplink capacity of a system as well as standby time of the terminal.
Specifically, the subsequent slots may be all or a part of slots after the first part of slots in the TTI.
Control of the terminal to reduce the transmitting power of the uplink channel of the terminal before the end of a certain slot may be implemented using a UMTS power control mechanism in a related technology, for example, by reducing a Signal to Interference Ratio Target (SirTarget) or directly generating or transmitting a Transmitting Power Control (TPC) command containing transmitting power reduction indication information. In such a manner, the method may be implemented without upgrading of the terminal, so that the aspect of the disclosure is provided with a wider application range, and for example, a mobile operator may be supported to improve system capacity independently of terminal upgrading on the basis of original deployment. Of course, those skilled in the art should understand that any other power control mechanism may be adopted for implementing the aspect of the disclosure no matter whether terminal upgrading is required or not as long as the transmitting power of the uplink channel of the terminal is reduced before the end of a certain slot, which will not be repeated here for saving space.
In addition, controlling the terminal to reduce the transmitting power of the uplink channel of the terminal before the end of a certain slot may further include a case of controlling the terminal to turn off the power.
In the embodiment of the disclosure, the first slot may be the last slot of the TTI, or may also be a slot earlier than the last slot of the TTI. For the latter, in consideration of possible influence of lower transmitting power of the uplink channel of the terminal on correct reception of the base station over the data of the uplink channel of the terminal in the next TTI, the control step may include:

controlling the terminal to reduce the transmitting power of the uplink channel of the terminal before the end of the first slot and to increase the transmitting power of the uplink channel of the terminal after the first slot and before the end of the TTI.

In the embodiment of the disclosure, there exist multiple cases when whether the transmitting power of the uplink channel of the terminal is allowed to be reduced in the subsequent slots of the TTI is determined according to the first data, for example: the transmitting power is allowed to be reduced when no uplink data channel of the terminal is transmitted in the TTI, and the transmitting power is not allowed to be reduced when a certain uplink data channel of the terminal is transmitted in the TTI; or, the transmitting power is allowed to be reduced according to the first data when all data information contained in the TTI by the terminal through the uplink data channel of the terminal can be obtained, and the transmitting power is not allowed to be reduced when according to the first data when the data information contained in the TTI by the terminal through the uplink data channel of the terminal cannot be completely obtained; and thus, the following multiple manners may be adopted for the first determination step:

<Manner 1>

in manner 1, in consideration of a relatively obvious difference between data of an uplink control channel of the terminal corresponding to cases where there is no transmission performed on an uplink data channel of the terminal in the TTI and where there is transmission performed on the uplink data channel of the terminal in the TTI, there may exist cases as follows:

the first data includes the data of the uplink control channel of the terminal, and the first determination step includes:

determining whether the uplink data channel of the terminal is transmitted in the TTI according to the data of the uplink control channel of the terminal at the end of the first part of slots, and if NO, entering the control step.

Specifically, the data of the uplink control channel of the terminal may be bit information of the uplink control channel of the terminal.

Determining whether the uplink data channel of the terminal is transmitted in the TTI according to the data of the uplink control channel of the terminal may include:

performing advanced decoding on the uplink control channel of the terminal in the TTI according to the data of the uplink control channel of the terminal; and

determining whether the uplink data channel of the terminal is transmitted in the TTI according to an advanced decoding result.

Here, advanced decoding is relative to the case where the uplink control channel of the terminal in the TTI in a current UMTS is decoded at the end of the whole TTI. That is, the base station may try decoding after receiving the bit information of the control channel in a part of slots of the current TTI, and for example, if a TTI includes 15 slots, the base station may try decoding after receiving the bit information of the control channel in 3 slots, and trying decoding may be understood as advanced decoding of the uplink control channel of the terminal in the current TTI.

Preferably, the uplink control channel of the terminal may include a DPCCH of the terminal, and correspondingly, determining whether the uplink data channel of the terminal is transmitted in the TTI according to the data of the uplink control channel of the terminal may include:

performing advanced decoding on the uplink DPCCH of the terminal to obtain a TFCI of the first part of slots according to data of the uplink DPCCH of the terminal; and

determining whether the TFCI of the first part of slots is 0, and if YES, determining that no uplink data channel of the terminal is transmitted in the TTI, otherwise determining that the uplink data channel of the terminal is transmitted in the TTI.

Preferably, the uplink control channel of the terminal may include an uplink E-DPCCH of the terminal, and correspondingly, determining whether the uplink data channel of the terminal is transmitted in the TTI according to the data of the uplink control channel of the terminal may include:

performing advanced decoding on the uplink E-DPCCH of the terminal to obtain an estimated SIR value of the uplink E-DPCCH of the terminal in the TTI according to data of the uplink E-DPCCH of the terminal; and

determining whether the obtained estimated SIR value is smaller than a preset SIR threshold value, and if YES, determining that no uplink data channel of the terminal is transmitted in the TTI, otherwise determining that the uplink data channel of the terminal is transmitted in the TTI.

In such a case, the number of the slots in the first part of slots may be more than or equal to 3.

Preferably, the uplink control channel of the terminal may include the uplink DPCCH of the terminal and the uplink E-DPCCH of the terminal, and correspondingly, determining whether the uplink data channel of the terminal is transmitted in the TTI according to the data of the uplink control channel of the terminal may include:

performing advanced decoding on the uplink DPCCH of the terminal to obtain the TCFI of the first part of slots according to the data of the uplink DPCCH of the terminal, and performing advanced decoding on the uplink E-DPCCH of the terminal to obtain the estimated SIR value of the uplink E-DPCCH of the terminal in the TTI according to the data of the uplink E-DPCCH of the terminal; and

determining whether the TFCI of the first part of slots is 0 and whether the obtained estimated SIR value is smaller than the preset SIR threshold value, and if YES, determining that no uplink data channel of the terminal is transmitted in the TTI, otherwise determining that the uplink data channel of the terminal is transmitted in the TTI.

<Manner 2>

In manner 2, considering that an interleaving technology is adopted for coding of a physical layer to scatter data in each slot of the TTI in an interleaving manner when the UMTS transmits an uplink data channel and the base station may probably decode the uplink data channel in the TTI correctly even if not receiving all the data in the TTI, there may exist cases as follows:

the first data includes the data of the uplink control channel of the terminal and the data of the uplink data channel of the terminal, and the first determination step includes:

determining whether the data of the uplink data channel of the terminal is successfully decoded according to the first data at the end of the first part of slots, and if YES, entering the control step.

Specifically, the uplink data channel of the terminal may be a DPDCH.

Compared with decoding according to the data of the uplink data channel in the whole TTI in the related technology, advanced decoding is performed ahead, that is, decoding is tried according to a part of the data in the whole TTI when the whole TTI has yet not ended, and it is indicated that the data in the whole TTI is correctly decoded if there is a correct Cyclic Redundancy Check (CRC).

Preferably, the first data may include the data of the uplink control channel of the terminal and the data of the uplink data channel of the terminal, and correspondingly, determining whether the data of the uplink data channel of the terminal is successfully decoded according to the first data may include:

obtaining the TFCI adopted for the uplink data channel of the terminal in the TTI according to the data of the uplink control channel of the terminal; and

determining whether the data of the uplink data channel of the terminal is successfully decoded according to the uplink data channel of the terminal and the adopted TFCI.

<Manner 3>

In manner 3, considering that the transmitting power of the uplink channel of the terminal is allowed to be reduced in the subsequent slots if the base station receives HS-DPCCH ACK domain data for High Speed Downlink Packet Access (HSDPA) data which has been transmitted to the terminal in the first part of slots by the base station in a case where the base station transmits downlink user data to the terminal by adopting HSDPA, there may exist cases as follows:

the first determination step includes:

determining whether the first data includes uplink HS-DPCCH ACK domain data for the HSDPA data when the base station has transmitted the HSDPA data to the terminal in the first part of slots at the end of the first part of slots, and if YES, entering the control step.

As mentioned in Manner 2, the first determination step may include: determining whether the data of the uplink data channel of the terminal is successfully decoded according to the first data at the end of the first part of slots, and if YES, entering the control step. Preferably, considering that there also exists a probability of successfully decoding the data if advanced decoding is performed, more slots in advance, on the uplink data channel of the terminal in the TTI, the base station may perform advanced decoding for many times at different time to reduce unnecessary power consumption as early as possible. Thus, the first determination step may include:

determining whether the data, received in the first P slots in the first part of slots, of the uplink data channel of the terminal is successfully decoded according to the data, received in the first P slots, of the uplink channel of the terminal at the end of the first P slots, controlling the terminal to reduce the transmitting power of the uplink channel of the terminal before the end of a second slot of the TTI if YES, and if NO, entering the first determination step,

wherein P is a natural number, and is smaller than the number of the slots in the first part of slots, and the second slot is earlier than the first slot.

The abovementioned manners may be used independently, and may also be combined for use. For example, as mentioned in Manner 2, the first data may include the data of the uplink control channel of the terminal and the data of the uplink data channel of the terminal, and the first determination step may include: determining whether the data of the uplink data channel of the terminal is successfully decoded according to the first data at the end of the first part of slots, and if YES, entering the control step. However, considering that the uplink data channel of the terminal is not always transmitted in each TTI, whether the uplink data channel of the terminal is transmitted in the TTI may be determined at first according to the data of the uplink control channel of the terminal in the first data, and if YES, whether the data of the uplink data channel of the terminal is successfully decoded is determined according to the data of the uplink control channel of the terminal and the data of the uplink data channel of the terminal in the first data. Thus, the first determination step may include:

determining whether the uplink data channel of the terminal is transmitted in the TTI according to the data of the uplink control channel of the terminal at the end of the first part of slots; and

decoding the data of the uplink data channel of the terminal when the uplink data channel of the terminal is transmitted in the TTI, and when decoding is successful, entering the control step.

Such a case may also be considered as a combination of Manner 1 and Manner 2.

For another example, if the data of the uplink DPDCH of the terminal is successfully decoded according to the data of the uplink DPCCH of the terminal and/or the data of the uplink DPDCH of the terminal, which have been received in the first part of slots, and the first data includes the uplink HS-DPCCH ACK domain data for the HSDPA data, the transmitting power of the uplink channel of the terminal is allowed to be reduced in the subsequent slots of the TTI at the end of the first part of slots when the base station has transmitted the HSDPA data to the terminal in the first part of slots, thereby entering the control step.

In the embodiment of the disclosure, in consideration of cases where the base station transmits the downlink user data to the terminal by adopting HSDPA and the like, the base station may be required to receive the user data in the uplink channel of the terminal, and may also be required to receive a feedback indicator for the downlink user data, for example, the uplink HS-DPCCH ACK domain data. Thus, the first determination step may include:

determining whether the transmitting power of the uplink channel of the terminal is allowed to be reduced in the subsequent slots of the TTI according to the first data at the end of the first part of slots, and if YES,

entering the control step before the end of the first slot and when a downlink channel feedback indicator is not required to be received; and

receiving the downlink channel feedback indicator before the end of the first slot and when the downlink channel feedback indicator is required to be received.

In the embodiment of the disclosure, in consideration of cases where the base station transmits the downlink user data to the terminal by adopting HSDPA and the like, the base station may be required to receive the user data in the uplink channel of the terminal, and may also be required to receive the feedback indicator for the downlink user data. Preferably, in consideration of case where the first slot has yet not started when the base station receives the downlink channel feedback indicator, in order to reduce unnecessary power consumption, the control step may include:

controlling the terminal to reduce the transmitting power of the uplink channel of the terminal before the end of the first slot after the downlink channel feedback indicator is received.

In the embodiment of the disclosure, if the terminal is required to transmit the downlink channel feedback indicator after the end of the first slot, in order to increase the probability that the base station successfully receives the downlink channel feedback indicator from the terminal, the control step may include:

controlling the terminal to increase the transmitting power of the uplink channel of the terminal at the end of the first slot when the downlink channel feedback indicator is transmitted.

Preferably, considering that the TTI has yet not ended when the downlink channel feedback indicator has been transmitted, controlling the terminal to increase the transmitting power of the uplink channel of the terminal before the downlink channel feedback indicator is transmitted may include:

controlling the terminal to increase the transmitting power of the uplink channel of the terminal before the downlink channel feedback indicator is transmitted and to reduce the transmitting power of the uplink channel of the terminal before the end of the TTI after the downlink channel feedback indicator has been transmitted.

Preferably, in consideration of possible influence of lower transmitting power of the uplink channel of the terminal on the correct reception of the base station over the data of the uplink channel of the terminal in the next TTI, after the step of controlling the terminal to increase the transmitting power of the uplink channel of the terminal before the downlink channel feedback indicator is transmitted and to reduce the transmitting power of the uplink channel of the terminal before the end of the TTI after the downlink channel feedback indicator has been transmitted, the method may further include:

controlling the terminal to increase the transmitting power of the uplink channel of the terminal before the last Q slots of the TTI, wherein Q is more than equal to 1.

The aspect of the disclosure further provides a channel advanced decoding-based UMTS power control method, and as shown in Fig. 2, the method includes:

Step 201, a base station receives and caches data of an uplink channel, a power control parameter and/or data of a downlink channel of a terminal;
Step 202, the base station performs advanced decoding on an uplink control channel in the first M slots of a current TTI, and determines whether the TTI is in an empty packet state; and/or the base station performs advanced decoding on the uplink data channel in the first M slots which are non-empty packets, and determines whether the decoding is successfully performed in the TTI; and
Step 203, the base station reduces transmitting power of the uplink channel which is in the empty packet state or is successfully decoded in subsequent slots of the TTI, and increases the transmitting power of the uplink channel in N slots before the end of the TTI.

Specifically, the channel advanced decoding-based UMTS power control method may be a DPCCH, HS-DPCCH ACK domain data and E-DPCCH empty packet detection-based power control method, or is an E-DPCCH advanced decoding-based power control method. For contents of the method, please refer to the following contents related to each channel, those skilled in the art may thus implement the channel advanced decoding-based UMTS power control method, and description will not be given independently for saving space.
Regulation parameters for the transmitting power include a SirTarget and TPC.
The aspect of the disclosure further records a computer storage medium, in which a computer-executable instruction is stored, wherein the computer-executable instruction is configured to execute the power control method shown in Fig. 1, or execute the power control method shown in Fig. 2.
In order to make clearer the purpose, technical solutions and advantages of the embodiment of the disclosure, the embodiment of the disclosure is described below with reference to the drawings in more detail.
In the following more detailed description, a SirTarget regulation manner is adopted for conveniently describing the power control method, and it is important to note that any power regulation manner shall fall within the scope of protection of the disclosure.
In the following more detailed description, in order to provide convenience for description, the case where there is no transmission performed on an uplink data channel of the terminal in the TTI is called "the TTI is in an empty packet state" or "the TTI is an empty packet", and the case where there is transmission performed on the uplink data channel of the terminal in the TTI is called "the TTI is in a non-empty packet state" or "the TTI is a non-empty packet".

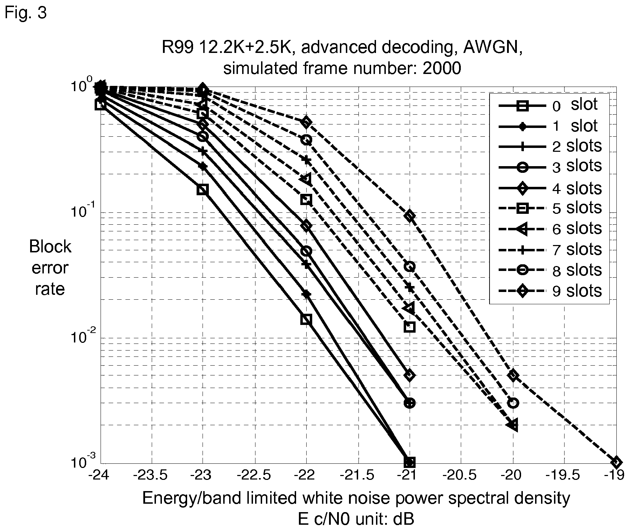

As mentioned in Manner 1, whether the uplink data channel of the terminal is transmitted in the TTI is determined according to the TFCI obtained by performing advanced decoding on the uplink DPCCH of the terminal. Here, detailed description is given here. Fig. 3 is a TFCI coding characteristic of an uplink DPCCH. A TFCI coding formula specified by 3rd Generation Partnership Project (3GPP) protocol is as follows:

$$b_i = \sum_{n=0}^{9} \left( a_n \times M_{i,n} \right) \bmod 2$$

where i=0,...,31,

where $a_n$ is a TFCI coding input bit, $b_i$ is a TFCI coding output bit and $M_{i,n}$ is a Reed-Muller coding sequence.

When the TFCI coding input bit is totally 0, the TFCI coding output bit is also totally 0; and when the TFCI coding input bit is non-totally 0, the TFCI coding output bit is also non-totally 0. The TFCI of the uplink DPCCH is decoded in advance, and if the TFCI obtained after decoding is totally 0, it is determined that no uplink data channel of the terminal is transmitted in the TTI, otherwise it is determined that the uplink data channel of the terminal is transmitted in the TTI.

As shown in Fig. 3, when a 10-bit TFCI is 0, the bits are totally 0 after Reed-Muller coding, and such a characteristic is remarkably different from that of a data packet of the uplink data channel, so that the empty packet state may be determined in advance in the first few slots of the TTI.

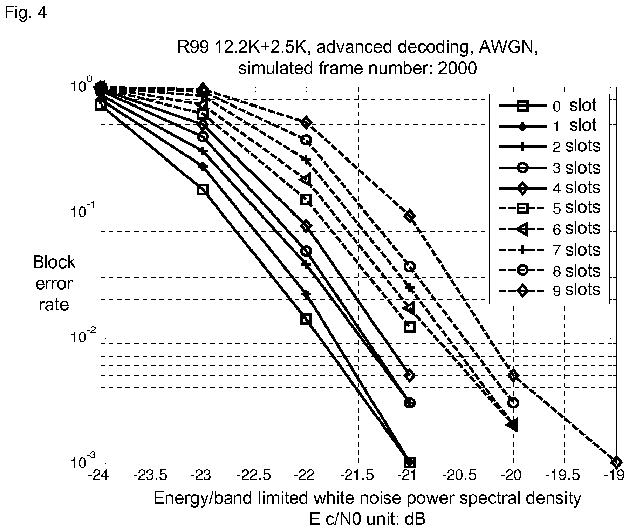

As mentioned in Manner 2, the uplink data channel of the terminal may be a DPDCH. Fig. 4 is an advanced decoding characteristic of an uplink DPDCH. When the uplink DPDCH is decoded, there exists a probability of correct decoding during advanced decoding, and when the uplink DPDCH channel is decoded different time in advance, probabilities of correct decoding are different. If the uplink DPDCH is decoded earlier, the probability of correct decoding is lower, and on the contrary, if the uplink DPDCH is decoded later, the probability of correct decoding is higher.

<Implementation A>

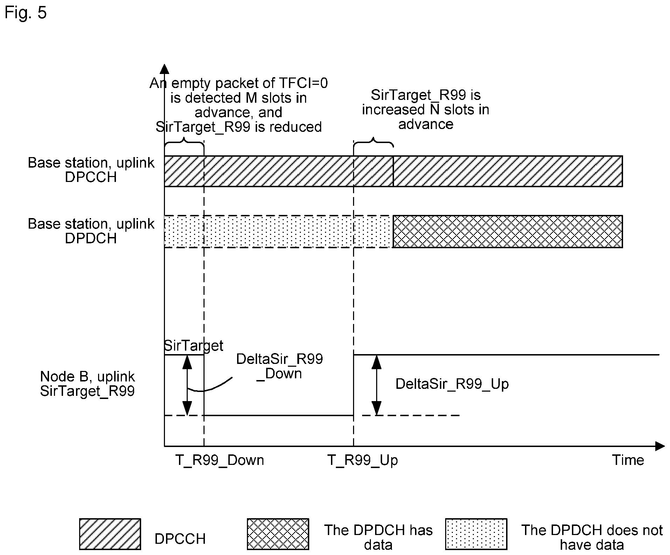

Implementation A is described as follows where the first determination step adopts Manner 1 and the first data includes data of the uplink DPCCH of the terminal. Fig. 5 is a diagram of an uplink DPCCH empty packet advanced detection-based power control method according to implementation A. As shown in Fig. 5, the power control method includes the following steps:

Step 1, the base station receives and caches the data of the uplink DPCCH by taking a slot as a unit;

Step 2, the base station starts decoding the TFCI after receiving and caching TFCI bits of M slots of each TTI, specifically, a value of M is a positive integer, M is smaller than the number of the slots occupied by the TTI, and for example, if TTI=20ms, the TTI occupies 30 slots;

Step 3, if the TFCI obtained after decoding is 0, it is determined that the TTI is in an empty packet state, and if the TFCI obtained after decoding is not 0, it is determined that the TTI is in a non-empty packet state;

Step 4, if the TTI is in the empty packet state, an R99 protocol SirTarget (SirTarget_R99) is reduced by DeltaSir_R99_Down to obtain reduced SirTarget_R99=SirTarget-DeltaSir_R99_Down after the first M slots of the TTI, and the time is recorded as T_R99_Down, wherein SirTarget is a target SIR when the base station confirms that the TTI is an empty packet; and

Step 5, SirTarget_R99 is increased by DeltaSir_R99_Up to obtain SirTarget_R99=SirTarget-DeltaSir_R99_Down+DeltaSir_R99_Up in N slots before the end of the TTI, and the time is recorded as T_R99_Up.

As shown in Fig. 5, M+N is smaller than the number of the slots occupied by the TTI.

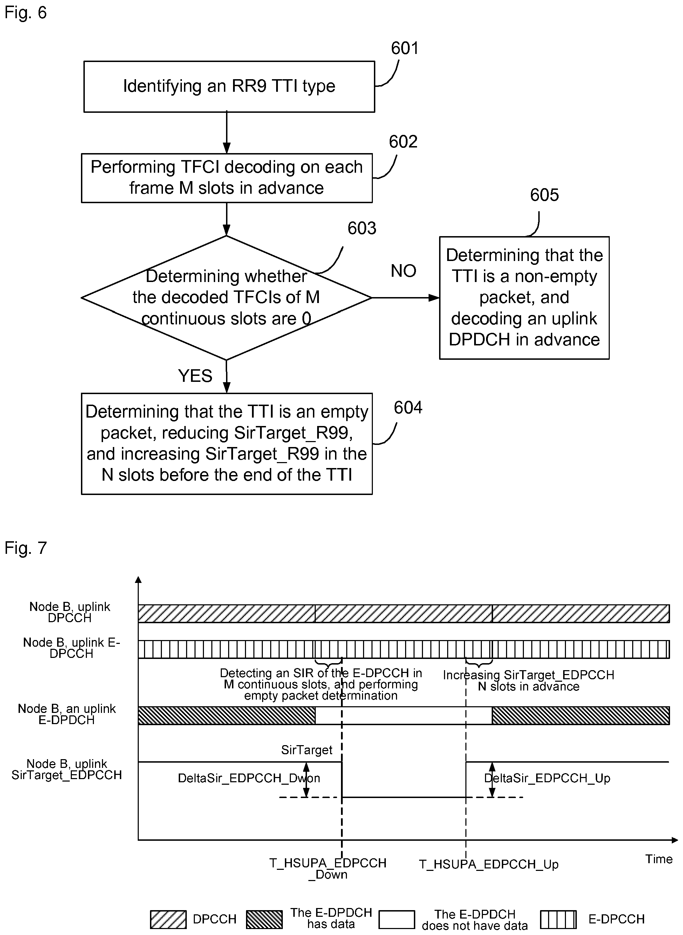

Fig. 6 is an uplink DPCCH empty packet advanced detection-based power control flow according to implementation A, and the flow includes the following steps:

Step 601, the base station determines an RR9 TTI type;

Step 602, the base station performs TFCI decoding on each TTI M slots in advance by taking a TTI as a unit;

Step 603, whether the decoded TFCIs of M continuous slots are 0 is determined, Step 604 is executed if YES, otherwise Step 605 is executed;

Step 604, the TTI is determined to be in an empty packet state, SirTarget_R99 is reduced by DeltaSir_R99_Down, and SirTarget_R99 is increased by DeltaSir_R99_Up in the N slots before the end of the TTI; and

Step 605, the TTI is determined to be a non-empty packet, and the uplink DPDCH is decoded in advance.

<Implementation B>

Implementation B is described below where the first determination step adopts Manner 1 and the first data includes data of the uplink E-DPCCH of the terminal. An uplink E-DPCCH empty packet detection-based power control method according to implementation B includes the following steps:

Step 1, the base station identifies a High Speed Uplink Packet Access (HSUPA) TTI type of the terminal;
Step 2, if the HSUPA TTI type is a 10ms TTI, an SIR of M continuous slots of each frame is detected; and
Step 3, if the SIR of the M continuous slots does not exceed an SIR threshold value, it is determined that the TTI is an empty packet, the uplink transmitting power of the terminal is reduced, and the uplink transmitting power of the terminal is increased in the N slots before the end of the TTI.

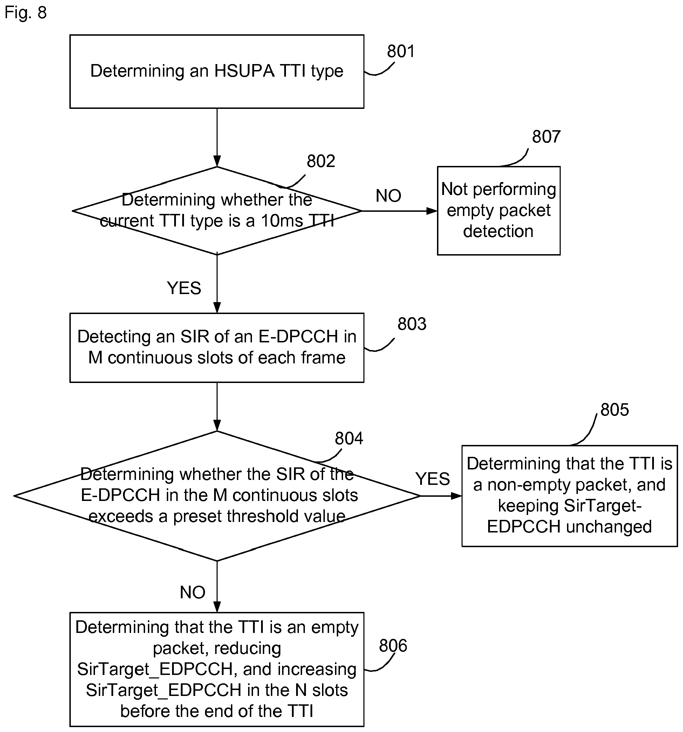

Implementation B is described below with reference to Fig. 7 and Fig. 8 in detail. Here, the SirTarget regulation manner is adopted for conveniently describing the power control method, and any power regulation manner shall fall within the scope of protection of the disclosure.

Fig. 7 is a diagram of an uplink E-DPCCH empty packet advanced detection-based power control method according to implementation B, and the uplink E-DPCCH empty packet advanced detection-based power control method includes the following steps:

Step 1, the base station receives and caches channel data of an E-DPCCH by taking a slot as a unit;

Step 2, the base station starts estimating the SIR of the E-DPCCH every time when receiving the data of the E-DPCCH in M (M is valued to be a positive integer, and is smaller than 15) slots of each TTI, wherein the TTI adopts a frame length, that is, a TTI is a frame;

Step 3, the estimated SIR of the E-DPCCH is compared with a preset SIR threshold value Threshold_UPA, and if the estimated SIR is smaller than the preset SIR threshold value, it is determined that the frame is an empty packet;

Step 4, if the frame is an empty packet, SirTarget_EDPCCH is reduced by DeltaSir_EDPCCH_Down to obtain reduced SirTarget_EDPCCH=SirTarget-DeltaSir_EDPCCH_Down after the first M slots of the TTI, and the time is recorded as T_HSUPA_Down, wherein SirTarget is a target SIR when the base station confirms that the TTI is an empty packet; and

Step 5, SirTarget_EDPCCH is increased by DeltaSir_EDPCCH_Up to obtain SirTarget_EDPCCH=SirTarget-DeltaSir_EDPCCH_Down+DeltaSir_EDPCCH_Up in the N (N is valued to be a positive integer) slots before the end of the frame, and the time is recorded as T_HSUPA_Up.

Fig. 8 is an uplink E-DPCCH empty packet advanced detection-based power control flow according to implementation B, and the flow includes the following steps:

Step 801, the base station determines an HSUPA TTI type of the terminal;
Step 802, whether the current TTI type is a 10ms TTI is determined, Step 803 is executed if YES, otherwise Step 807 is executed;
Step 803, the base station detects the SIR of the E-DPCCH in M continuous slots of each frame;
Step 804, whether the SIR of the E-DPCCH in the M continuous slots exceeds the preset threshold value is determined, Step 805 is executed if YES, otherwise Step 806 is executed;
Step 805, the TTI is determined to be a non-empty packet, and SirTarget-EDPCCH is kept unchanged;
Step 806, the TTI is determined to be in an empty packet state, SirTarget_EDPCCH is reduced by DeltaSir_EDPCCH_Down, and SirTarget_EDPCCH is increased by DeltaSir_EDPCCH_Up in the N slots before the end of the TTI; and
Step 807, empty packet detection is not performed.

<Implementation C>

Implementation C in an aspect of the disclosure is described below. In implementation C, decoding is performed for many times on the basis of Manner 2 in the first determination step, whether the uplink data channel of the terminal is transmitted in the TTI is determined at first according to the data of the uplink control channel of the terminal in the first data, and moreover, the first data includes the data of the uplink DPCCH of the terminal and the data of the uplink DPDCH of the terminal. An uplink DPDCH advanced decoding-based power control method according to implementation C includes:

Step 1, the base station identifies an R99 TTI type of the terminal;
Step 2, the TFCI is decoded M slots in advance in each TTI, wherein the TTI adopts the frame length, that is, a TTI is a frame; and
Step 3, if the decoded TFCI of M continuous slots is not 0, it is determined that the frame is in a non-empty packet state, and decoding is tried in the Lth slot; if a decoding error occurs, decoding is tried again in the Kth slot; and if decoding is successful, the uplink transmitting power of the terminal is reduced, and the uplink transmitting power of the terminal is increased in the N slots before the end of the TTI.

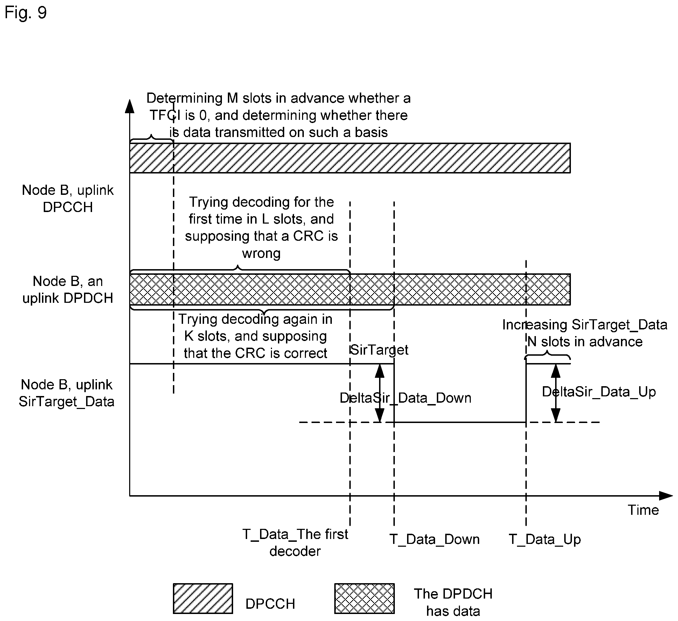

Implementation C is described below with reference to Fig. 9 in detail.
Fig. 9 is a diagram of an uplink DPDCH advanced decoding-based power control method according to implementation C, and as shown in Fig. 9, the uplink DPDCH advanced decoding-based power control method includes the following steps:

Step 1, the base station receives and caches data of a DPCCH by taking a slot as a unit;

Step 2, the base station starts decoding the TFCI after receiving and caching TFCI domain bit information of M (M is valued to be a positive integer, and is smaller than the number of the slots occupied by the TTI, and for example, if TTI=20ms, the TTI occupies 30 slots) slots of each TTI;

Step 3, if the TFCI obtained after decoding is 0, it is determined that the TTI is in an empty packet state, and if the TFCI obtained after decoding is not 0, it is determined that the TTI is in a non-empty packet state;

Step 4, if the TTI is in the non-empty packet state, the base station tries to decode the DPDCH for the first time after the first L (L is valued to be a positive integer, and is more than or equal to M) slots of the TTI;

Step 5, if the base station fails to try decoding for the first time, the base station tries to decode the DPDCH for the second time after the first K (K is valued to be a positive integer, and is larger than L and smaller than the number of the slots occupied by the TTI, and for example, if TTI=20ms, the TTI occupies 30 slots) slots of the TTI;

Step 6, if the base station succeeds in trying to decoding the DPDCH for the second time, SirTarget_Data is reduced by SirDelta_Data_Down to obtain reduced SirTarget_Data=SirTarget-SirDelta_Data_Down, and the time is recorded as T_Data_Down, wherein SirTarget is a target SIR when the base station confirms that the TTI is correctly decoded; and

Step 7, SirTarget_Data is increased by DeltaSir_Data_Up to obtain SirTarget_Data =SirTarget-DeltaSir_Data_Down+DeltaSir_Data_Up in N (N is valued to be a positive integer) slots before the end of the TTI, and the time is recorded as T_Data_Up.

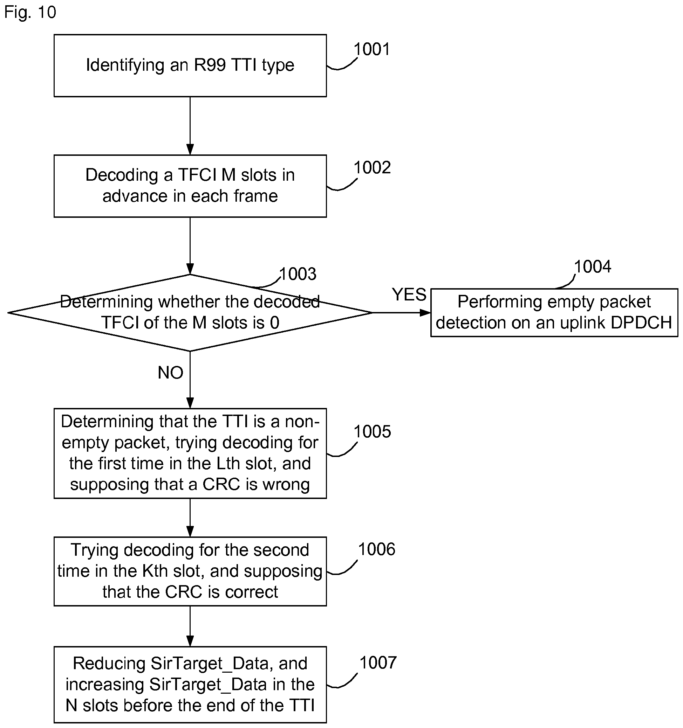

Fig. 10 is an uplink DPDCH advanced decoding-based power control flow according to implementation C, and as shown in Fig. 10, the flow includes the following steps:

Step 1001, the base station determines the R99 TTI type of the terminal;

Step 1002, the base station decodes the TFCI M slots in advance at the head of each TTI;

Step 1003, whether the decoded TFCI is 0 is determined, Step 1004 is executed if YES, otherwise Step 1005 is executed;

Step 1004, whether the uplink DPDCH is an empty packet is detected;

Step 1005, the TTI is determined to be in a non-empty packet state, and decoding is tried in the Lth slot;

Step 1006, if the base station fails to try to decode the DPDCH for the first time, decoding is tried for the second time in the Kth slot; and

Step 1007, if the DPDCH is correctly decoded in the second time, SirTarget_Data is reduced by SirDelta_Data_Down, and

SirTarget_Data is increased by SirDelta_Data_Up in the N slots before the end of the TTI.

Many contents related to the uplink HS-DPCCH are mentioned above, and description is comprehensively given below with implementation D in detail. An uplink HS-DPCCH ACK domain empty packet detection-based power control method according to implementation D includes the following steps:

Step 1, a scheduler of the base station detects a High Speed Downlink Shared Channel (HS-DSCH) scheduling requirement of the terminal;

Step 2, if a current subframe has a scheduling requirement and transmitting power is reduced at the moment, the uplink transmitting power of the terminal is increased, and then the terminal is scheduled after M slots;

Step 3, if the current subframe has the scheduling requirement and the transmitting power is not reduced at the moment, the High Speed Downlink Packet Access (HSDPA) scheduler schedules the terminal, and the current transmitting power is maintained; and

Step 4, the uplink transmitting power of the terminal is reduced after a High Speed Physical Downlink Shared Channel (HS-PDSCH) is transmitted for N slots.

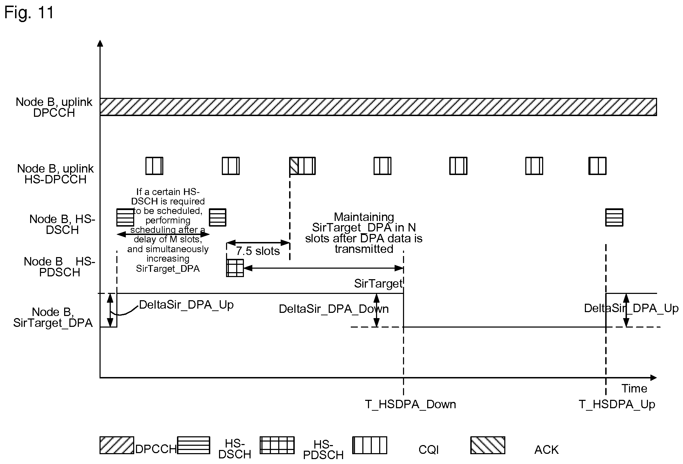

Implementation D is described below with reference to Fig. 11 in detail.

Fig. 11 is a diagram of an uplink HS-DPCCH ACK domain empty packet detection-based power control method according to implementation D, and as shown in Fig. 11, the uplink HS-DPCCH ACK domain empty packet detection-based power control method includes the following steps:

Step 1, the scheduler of the base station detects whether the terminal has the HS-DSCH scheduling requirement in each subframe;

Step 2, if the scheduler of the base station confirms that a certain HS-DSCH of the terminal is required to be scheduled in the current subframe and SirTarget_DPA is reduced at the moment, the HSDPA scheduler schedules the terminal after a delay of M (M is valued to be a positive integer) slots, and meanwhile, SirTarget_DPA is increased by DeltaSir_DPA_Up;

Step 3, if the scheduler of the base station confirms that a certain HS-DSCH of the terminal is required to be scheduled in the current subframe but SirTarget_DPA is not reduced at the moment, the terminal is scheduled, and the current SirTarget_DPA is maintained;

Step 4, SirTarget_DPA is reduced by SirDeltaDPA to obtain reduced SirTarget_DPA=SirTarget-DeltaSir_DPA_Down after the HS-PDSCH is transmitted for N (N is valued to be a positive integer) slots, and the moment is recorded as T_HSDPA_Down, wherein SirTarget is a target SIR when the base station confirms that the HS-PDSCH is transmitted for N slots; and

Step 5, when the HSDPA scheduler confirms that the terminal has the HS-DSCH scheduling requirement and SirTarget_DPA is reduced, SirTarget_DPA is increased by DeltaSir_DPA_Up to obtain increased SirTarget_DPA=SirTarget-DeltaSir_DPA_Down+DeltaSir_DPA_Up, and the moment is recorded as T_HSDPA_Up.

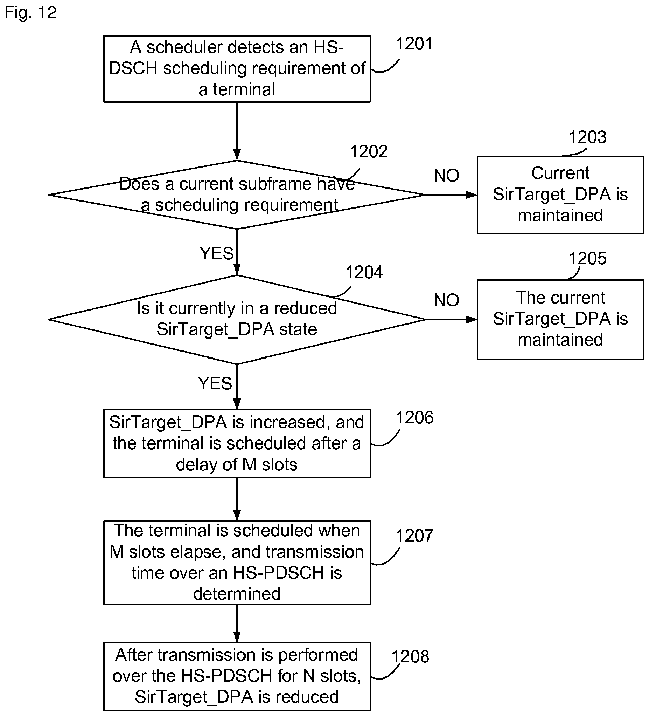

Fig. 12 is an uplink HS-DPCCH ACK domain empty packet detection-based power control flow according to implementation D, which includes:

Step 1201, the scheduler of the base station detects the HS-DSCH scheduling requirement of the terminal;

Step 1202, whether the subframe has a scheduling requirement is determined, Step 1204 is executed if YES, otherwise Step 1203 is executed;

Step 1203: the scheduler of the base station schedules the terminal, and the current SirTarget_DPA is maintained;

Step 1204, it is determined whether it is currently in a reduced SirTarget_DPA state, Step 1206 is executed if YES, otherwise Step 1205 is executed;

Step 1205, the current SirTarget_DPA is maintained;

Step 1206, SirTarget_DPA is increased by DeltaSir_DPA_Up, and the terminal is scheduled after a delay of M slots;

Step 1207, the terminal is scheduled when M slots elapse, and transmission time over the HS-PDSCH is determined; and

Step 1208, after the HS-PDSCH is transmitted for N slots, SirTarget_DPA is reduced by DeltaSir_DPA_Down.

For the UMTS, the uplink data channel of the terminal is usually transmitted along with transmitting of the uplink control channel but an average duty ratio of the uplink data channel of the terminal is actually very low (duty ratio: a ratio of data transmitting to a service duration), which means that transmitting of the uplink control channel is unnecessary in most of time, and an analysis result shows that uplink system capacity consumption in uplink empty packet data exceeds 50% of the whole uplink system capacity and may greatly reduce the standby time of the terminal.

The interleaving technology is adopted for the coding of the physical layer to scatter the data in each slot of the TTI in the interleaving manner when the UMTS transmits the uplink data channel, and the base station may probably decode the uplink data channel in the TTI correctly even if not receiving all the data in the TTI. 3GPP protocol specifies that the uplink data channel is still transmitted in the remaining time of the TTI after the base station correctly decodes the uplink data channel in advance, which brings additional interference and reduces the uplink system capacity as well as the standby time of the terminal.

Along with rapid growth of data services, problems about air interface capacity of cells become severer and severer. The mobile operator expects to improve the system capacity independently of terminal upgrading on the basis of the original deployment, which is the most economical and practical. The key problem in UMTS researches is how to effectively control the power on an uplink channel in an empty packet state or an uplink channel for which a data channel is decoded in advance to maximally reduce the transmitting power of the terminal so as to reduce uplink interference and further improve the uplink capacity of the system as well as the standby time of the terminal on the premise of ensuring the quality of service required by the terminal.

The embodiment of the disclosure and each of its implementation provide effective solutions to the problems.

Examples about capacity gains achieved by implementing the power control method provided by the embodiment of the disclosure for typical R99 and HSUPA services are given here with reference to Table 1. As shown in Table 1: when a data duty ratio of the R99 or HSUPA service is 15% (an average statistical duty ratio value in a commercial network is 10%~15%), Bd/Bc=15/13 or Bed/Bc is 21/15 and power parameter adjustment in an empty packet state is 10dB, the system capacity gains are 106% and 30% respectively with the adoption of the technical solutions of the embodiment. Specifically, Bd is a gain factor of a DPDCH; Bc is a gain factor of a DPCCH; and Bed is a gain factor of an E-DPDCH.

Table 1

| Typical service | Data duty ratio | Bd/Bc or Bed/Bc | Power parameter adjustment | Capacity gain achieved by the disclosure |
|---|---|---|---|---|
| R99 | 15% | 15/13 | 10dB | 106% |
| HSUPA | 15% | 21/15 | 10dB | 30% |

The obtained capacity gains only represent improved capacity gains achieved by the embodiment of the disclosure in a specific supposed scenario, and capacity gains achieved under different parameter configurations are different, and will not be enumerated.

The abovementioned technical means may be freely combined in cases of no conflicts. An aspect of the disclosure further provides a power control device, which may be adopted for a UMTS base station, the device including:

a first determination module, configured to determine whether transmitting power of an uplink channel of a terminal is allowed to be reduced in subsequent slots of a current TTI according to first data, received in a first part of slots of the TTI, of the uplink channel of the terminal at the end of the first part of slots of the current TTI, and if YES, trigger a first control module; and

the first control module, configured to control the terminal to reduce the transmitting power of the uplink channel of the terminal before the end of a first slot in the subsequent slots.

As can be seen, whether the transmitting power of the uplink channel of the terminal is allowed to be reduced in the subsequent slots of the TTI is determined according to the first data, received in the first part of slots, of the uplink channel of the terminal at the end of the first part of slots of the current TTI, and if YES, the terminal is controlled to reduce the transmitting power of the uplink channel of the terminal before the end of the first slot in the subsequent slots, so that unnecessary transmitting power consumption of the terminal is reduced.

Specifically, the first slot is earlier than the last slot of the TTI, and the first control module may further include:

a first control unit, configured to control the terminal to reduce the transmitting power of the uplink channel of the terminal before the end of the first slot and to increase the transmitting power of the uplink channel of the terminal after the first slot and before the end of the TTI.

In addition, the first data may include data of an uplink control channel of the terminal, and the first determination module may include:

a first determination unit, configured to determine whether there is transmission performed on an uplink data channel of the terminal in the TTI according to the data of the uplink control channel of the terminal at the end of the first part of slots, and if NO, trigger the first control module.

Or, the first data may include the data of the uplink control channel of the terminal and data of the uplink data channel of the terminal, and the first determination module may include:

a second determination unit, configured to determine whether the data of the uplink data channel of the terminal is successfully decoded according to the first data at the end of the first part of slots, and if YES, trigger the first control module.

In addition, the first determination module may include:

a third determination unit, configured to determine whether the transmitting power of the uplink channel of the terminal is allowed to be reduced in the subsequent slots of the TTI according to the first data at the end of the first part of slots, and if YES,

trigger the first control module before the end of the first slot and when a downlink channel feedback indicator is not required to be received, and

receive the downlink channel feedback indicator before the end of the first slot and when the downlink channel feedback indicator is required to be received.

In addition, the first control module may include:

a second control unit, configured to control the terminal to reduce the transmitting power of the uplink channel of the terminal before the end of the first slot after the downlink channel feedback indicator is received.

In addition, the device may further include:

a second control module, configured to control the terminal to increase the transmitting power of the uplink channel of the terminal before the downlink channel feedback indicator is transmitted at the end of the first slot.

During a practical application, each of the first determination module and the first control module may be implemented by a Central Processing Unit (CPU), Digital Signal Processor (DSP) or Field Programmable Gate Array (FPGA) in the device. An aspect of the disclosure further provides a base station, which includes the abovementioned power control device.

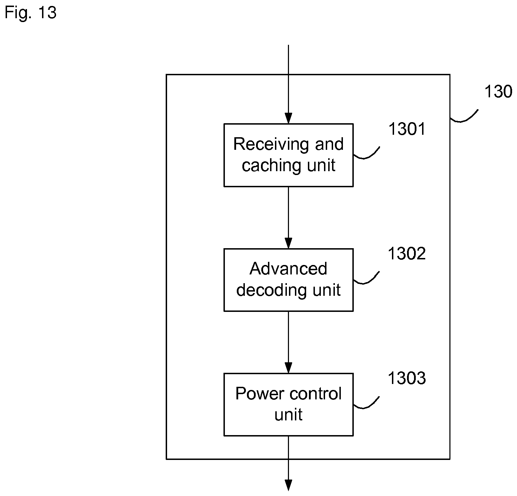

The embodiment of the disclosure further provides a channel advanced decoding-based UMTS power control device 130, and as shown in Fig. 13, the device includes: a receiving and caching unit 1301, an advanced decoding unit 1302 and a power control unit 1303, wherein

the receiving and caching unit 1301 is configured to receive and cache data of an uplink channel (including DPCCH, a DPDCH, an HS-DPCCH, an E-DPCCH or an E-DPDCH) of a terminal, a power control parameter and/or data of an HS-DSCH of the terminal;

the advanced decoding unit 1302 is configured to perform advanced decoding on an uplink control channel, determine whether a TTI is in an empty packet state according to a decoding result, and if the TTI is not in the empty packet state, perform advanced decoding on an uplink data channel and determine whether the corresponding TTI is correctly decoded; and

the power control unit 1303 is configured to reduce uplink transmitting power of the uplink channel, which is in the empty packet state or is successfully decoded, of the terminal in subsequent slots of the TTI, and increase the uplink transmitting power of the terminal before the end of the TTI.

During a practical application, the receiving and caching unit 1301 may be implemented by a memory in the base station; the advanced decoding unit 1302 may be implemented by a decoder in the base station; and the power control unit 1303 may be implemented by a CPU, DSP or FPGA in the base station.

The abovementioned move detailed description made with reference to the drawings for the power control method provided by the embodiment of the disclosure may also be considered as more detailed description about the channel advanced decoding-based UMTS power control device 130.

Those skilled in the art should understand that the embodiment of the disclosure may provide a method, a system or a computer program product. Therefore, the disclosure may adopt a form of hardware embodiment, software embodiment or combined software and hardware embodiment. Moreover, the disclosure may adopt a form of computer program product executable on one or more computer-available storage media (including, but not limited to, a disk memory, an optical memory and the like) including computer-available program codes.

The disclosure is described with reference to flowcharts and/or block diagrams of the method, equipment (system) and computer program product according to the embodiment of the disclosure. It should be understood that each flow and/or block in the flowcharts and/or the block diagrams and combinations of the flows and/or blocks in the flowcharts and/or the block diagrams may be implemented by computer program instructions. These computer program instructions may be provided for a universal computer, a dedicated computer, an embedded processor or a processor of other programmable data processing equipment to generate a machine, so that a device for realizing a function specified in one or more flows in the flowcharts and/or one or more blocks in the block diagrams is generated by the instructions executed through the computer or the processor of the other programmable data processing equipment.

These computer program instructions may also be stored in a computer-readable memory capable of guiding the computer or the other programmable data processing equipment to work in a specific manner, so that a product including an instruction device may be generated by the instructions stored in the computer-readable memory, the instruction device realizing the function specified in one flow or many flows in the flowcharts and/or one block or many blocks in the block diagrams.

These computer program instructions may further be loaded onto the computer or the other programmable data processing equipment, so that a series of operating steps are executed on the computer or the other programmable data processing equipment to generate processing implemented by the computer, and steps for realizing the function specified in one flow or many flows in the flowcharts and/or one block or many blocks in the block diagrams are provided by the instructions executed on the computer or the other programmable data processing equipment.

The above is only the implementation of the embodiment of the disclosure, it is important to note that those skilled in the art may further make improvements and embellishments without departing from the principle of the embodiment of the disclosure, and these improvements and embellishments shall fall within the scope of protection of the embodiment of the disclosure.

**Claims**

1. A power control method performed by a base station, wherein the method comprises:

at an end of a first part of slots of a current Transmission Time Interval, TTI, determining (101) whether transmitting power of an uplink channel of a terminal is allowed to be reduced in subsequent slots of the current TTI according to first data, received in the first part of slots of the TTI, of the uplink channel of the terminal; and if YES, controlling (102) the terminal to reduce the transmitting power of the uplink channel of the terminal before the end of a first slot in the subsequent slots; and
the determining (101) whether transmitting power of an uplink channel of a terminal is allowed to be reduced in subsequent slots of the current TTI according to first data comprises:

determining whether the first data includes uplink HS-DPCCH ACK domain data for the HSDPA data when the HSDPA data has been transmitted to the terminal in the first part of slots at the end of the first part of slots.

**2.** The method according to claim 1, wherein the first slot is earlier than the last slot of the TTI, and the controlling step comprises:

controlling the terminal to reduce the transmitting power of the uplink channel of the terminal before the end of the first slot and to increase the transmitting power of the uplink channel of the terminal after the first slot and before the end of the TTI.

**3.** The method according to claim 1, wherein the first data comprises data of an uplink control channel of the terminal, and wherein the determining step comprises:

determining whether there is transmission performed on an uplink data channel of the terminal in the TTI according to the data of the uplink control channel of the terminal at the end of the first part of slots, and if NO, determining that transmitting power of the uplink channel of the terminal is reduced in subsequent slots of the current TTI.

**4.** The method according to claim 1, wherein the first data comprises data of an uplink control channel of the terminal and data of an uplink data channel of the terminal, and
wherein the determining step comprises:

determining whether the data of the uplink data channel of the terminal is successfully decoded according to the first data at the end of the first part of slots, and if YES, determining that transmitting power of the uplink channel of the terminal is reduced in subsequent slots of the current TTI.

**5.** The method according to claim 4, wherein the determining step comprises:

determining whether there is transmission performed on an uplink data channel of the terminal in the TTI according to the data of the uplink control channel of the terminal at the end of the first part of slots; and decoding the data of the uplink data channel of the terminal when there is transmission performed on the uplink data channel of the terminal in the TTI, and when the decoding is successful, determining that transmitting power of the uplink channel of the terminal is reduced in subsequent slots of the current TTI.

**6.** The method according to claim 4, further comprising:

determining whether data, received in the first P slots in the first part of slots, of the uplink data channel of the terminal is successfully decoded according to data, received in the first P slots, of the uplink channel of the terminal at the end of the first P slots, controlling the terminal to reduce the transmitting power of the uplink channel of the terminal before the end of a second slot of the TTI if YES, and if NO, performing the determining step,
wherein P is a natural number, and is smaller than the number of slots in the first part of slots, and the second slot is earlier than the first slot.

**7.** The method according to claim 1, wherein after determining that transmitting power of the uplink channel of the terminal is allowed to be reduced in subsequent slots of the current TTI, the method further comprises:

determining whether a downlink channel feedback indicator is required to be received; and
if No, performing the controlling step before the end of the first slot; and
if YES, receiving the downlink channel feedback indicator before the end of the first slot.

**8.** The method according to claim 1, wherein the controlling step comprises:

controlling the terminal to reduce the transmitting power of the uplink channel of the terminal before the end of the first slot and after a downlink channel feedback indicator is received.

**9.** The method according to claim 1, further comprising: at the end of the first slot, controlling the terminal to increase the transmitting power of the uplink channel of the terminal before a downlink channel feedback indicator is transmitted.

**10.** A base station, comprising a power control device, wherein the power control device comprises: a first determination module, configured to determine whether transmitting power of an uplink channel of a terminal is allowed to be reduced in subsequent slots of a current Transmission Time Interval, TTI, according to first data, received in a first part of slots of the TTI, of the uplink channel of the terminal at an end of the first part of slots of the current TTI; and the first determination module, further configured to determine that transmitting power of the uplink channel of the terminal is allowed to be reduced in subsequent slots of the current TTI, if the first data includes uplink HS-DPCCH ACK domain data for the HSDPA data when the HSDPA data has been transmitted to the terminal in the first part of slots at the end of the first part of slots; and the first control module, configured to control the terminal to reduce the transmitting power of the uplink channel of the terminal before the end of the first slot in the subsequent slots, if the first determination module determines that transmitting power of the uplink channel of the terminal is allowed to be reduced in subsequent slots of the current TTI.

11. The device according to claim 10, wherein the first slot is earlier than the last slot of the TTI, and the first control module is configured to control the terminal to reduce the transmitting power of the uplink channel of the terminal before the end of the first slot and to increase the transmitting power of the uplink channel of the terminal after the first slot and before the end of the TTI.

12. The device according to claim 10, wherein the first data comprises data of an uplink control channel of the terminal, and the first determination module is configured to determine whether there is transmission performed on an uplink data channel of the terminal in the TTI according to the data of the uplink control channel of the terminal at the end of the first part of slots, and if NO, determine that transmitting power of the uplink channel of the terminal is reduced in subsequent slots of the current TTI.

13. The device according to claim 10, wherein the first data comprises data of an uplink control channel of the terminal and data of an uplink data channel of the terminal, and the first determination module is configured to determine whether the data of the uplink data channel of the terminal is successfully decoded according to the first data at the end of the first part of slots, and if YES, determine that transmitting power of the uplink channel of the terminal is reduced in subsequent slots of the current TTI.

14. The device according to claim 10, wherein when it is determined that the transmitting power of the uplink channel of the terminal is allowed to be reduced in the subsequent slots of the TTI according to the first data at the end of the first part of slots,
the first determination module is further configured to determine whether a downlink channel feedback indicator is required to be received, and if YES, receive the downlink channel feedback indicator before the end of the first slot, and the first control module is configured to control the terminal to reduce the transmitting power of the uplink channel of the terminal before the end of the first slot in the subsequent slots if it is determined that downlink channel feedback indicator is not required to be received.

15. The device according to claim 10, wherein the first control module is configured to control the terminal to reduce the transmitting power of the uplink channel of the terminal before the end of the first slot after a downlink channel feedback indicator is received.

16. The device according to claim 10, further comprising:

a second control module, configured to, at the end of the first slot, control the terminal to increase the transmitting power of the uplink channel of the terminal before the downlink channel feedback indicator is transmitted.

17. A computer storage medium, in which a computer-executable instruction is stored, wherein the computer-executable instruction is configured to execute steps as follows:

at an end of a first part of slots of a current Transmission Time Interval (TTI), determining whether transmitting power of an uplink channel of a terminal is allowed to be reduced in subsequent slots of the current TTI according to first data, received in the first part of slots of the TTI, of the uplink channel of the terminal, and; and if yes, controlling the terminal to reduce the transmitting power of the uplink channel of the terminal before the end of a first slot in the subsequent slots;
and the determining whether transmitting power of an uplink channel of a terminal is allowed to be reduced in subsequent slots of the current TTI according to first data comprises:

determining whether the first data includes uplink HS-DPCCH ACK domain data for the HSDPA data when the HSDPA data has been transmitted to the terminal in the first part of slots at the end of the first part of slots.

**Patentansprüche**

1. Leistungssteuerungsverfahren, durchgeführt von einer Basisstation, wobei das Verfahren Folgendes umfasst:

an einem Ende des ersten Teils von Schlitzen eines laufenden Transmission Time Interval, TTI, Bestimmen (101), ob die Übertragungsleistung von einem Uplinkkanal eines Terminals in folgenden Schlitzen des laufenden TTI gemäß ersten Daten reduziert werden soll, die im ersten Teil von Schlitzen des TTI des Uplinkkanals des Terminals erhalten wurden; und falls JA, steuern (102) des Terminals, um die Übertragungsleistung des Uplinkkanals des Terminal vor dem Ende eines ersten Schlitzes in den folgenden Schlitzen zu reduzieren; und das Bestimmen (101), ob die Übertragungsleistung von einem Uplinkkanal eines Terminals in folgenden Schlitzen des laufenden TTI gemäß ersten Daten reduziert werden soll, Folgendes umfasst:

Bestimmen, ob die ersten Daten Uplink HS-DPCCH ACK-Domänendaten für die HSDPA-Daten einschließen, wenn die HSDPA-Daten an den Terminal im ersten Teil von Schlitzen am Ende des ersten Teils von Schlitzen übertragen wurde.

2. Verfahren nach Anspruch 1, wobei der erste Schlitz früher als der Letzte Schlitz des TTI ist und der Schritt des Steuerns Folgendes umfasst:

Steuern des Terminals, um die Übertragungsleistung des Uplinkkanals des Terminals vor dem Ende des ersten Schlitzes zu reduzieren um die Übertragungsleistung des Uplinkkanals des Terminals nach dem ersten Schlitz vor dem Ende des TTI zu erhöhen.

3. Verfahren nach Anspruch 1, wobei die ersten Daten Daten eines Uplinksteuerkanals des Terminals umfassen, und wobei der Schritt des Bestimmens Folgendes umfasst:

Bestimmen, ob eine Übertragung auf einem Umplinkdatenkanal des Terminals im TTI gemäß den Daten des Uplinksteuerkanals des Terminals am Ende des ersten Teils von Schlitzen durchgeführt wird, und falls NEIN, Bestimmen, dass die Übertragungsleistung des Uplinkkanals des Terminals in folgenden Schlitzen des laufenden TTI reduziert wird.

4. Verfahren nach Anspruch 1, wobei die ersten Daten Daten eines Uplinksteuerkanal des Terminals und Daten eines Uplinkdatenkanals des Terminals umfassen, und wobei der Schritt des Bestimmens Folgendes umfasst:

Bestimmen, ob die Daten des Uplinkdatenkanals des Terminals erfolgreich gemäß den ersten Daten am Ende des ersten Teils von Schlitzen dekodiert werden, und falls JA, Bestimmen, dass die Übertragungsleistung des Uplinkkanals des Terminals in folgenden Schlitzen des laufenden TTI reduziert wird.

5. Verfahren nach Anspruch 4, wobei der Schritt des Bestimmens Folgendes umfasst:

Bestimmen, ob eine Übertragung auf einem Umplinkdatenkanal des Terminals im TTI gemäß den Daten des Uplinksteuerkanals des Terminals am Ende des ersten Teils von Schlitzen vorliegt; und Decodieren der Daten des Uplinkdatenkanals des Terminals, wenn eine Übertragung auf dem Uplinkdatenkanal des Terminals des TTI durchgeführt wird, und wenn das Dekodieren erfolgreich ist, Bestimmen, dass die Übertragungsleistung des Uplinkkanals des Terminals in folgenden Schlitzen des laufenden TTI reduziert wird.

6. Verfahren nach Anspruch 4, weiter umfassend:

Bestimmen, ob Daten, empfangen in den ersten P Schlitzen im ersten Teil von Schlitzen, des Uplinkdatenkanals des Terminals erfolgreich dekodiert sind gemäß den Daten, erhalten in den ersten P Schlitzen, des Uplinkkanals des Terminals am Ende der ersten P Schlitze, Steuern des Terminals, um die Übertragungsleistung des Uplinkkanals des Terminals vor dem Ende eines zweiten Schlitzes des TTI zu reduzieren, falls JA, und falls NEIN, Durchführen des Schritts des Bestimmens, wobei P eine natürliche Zahl und kleiner als die Anzahl von Schlitzen im ersten Teil der Schlitze ist, und der zweite Schlitz früher als der erste Schlitz ist.

7. Verfahren nach Anspruch 1, wobei nach dem Bestimmen, dass Übertragungsleistung des Uplinkkanals des Terminals in folgenden Schlitzen des laufenden TTI reduziert werden kann, das Verfahren weiter Folgendes umfasst:

Bestimmen, ob eine Downlinkkanal-Feedbackanzeige erhalten werden muss; und
falls NEIN, Durchführen des Schritts des Steuerns von dem Ende des ersten Schlitzes; und
falls JA, Erhalten der Downlinkkanal-Feedbackanzeige vor dem Ende des zweiten Schlitzes.

8. Verfahren nach Anspruch 1, wobei der Schritt des Bestimmens Folgendes umfasst:

Steuern des Terminals, um die Übertragungsleistung des Uplinkkanals des Terminals vor dem Ende des ersten Schlitzes und nachdem eine Downlinkkanal-Feedbackanzeige erhalten wurde zu reduzieren.

9. Verfahren nach Anspruch 1, weiter umfassend: am Ende des ersten Schlitzes, Steuern des Terminals, um die Übertragungsleistung des Uplinkkanals des Terminal zu erhöhen, bevor eine Downlinkkanal-Feedbackanzeige übertragen wird.

10. Basisstation, umfassend eine Leistungssteuerungsvorrichtung, wobei die Leistungssteuerungsvorrichtung Folgendes umfasst: ein erstes Bestimmungsmodul, das konfiguriert ist, um zu bestimmen, ob Übertragungsleistung eines Uplinkkanals eines Terminals in folgenden Schlitzen des laufenden Transmission Time Interval, TTI, reduziert werden kann, gemäß ersten Daten, erhalten in einem ersten Teil der Schlitze der TTI, des Uplinkkanals des Terminals an einem Ende des ersten Teils von Schlitzen des laufenden TTI; und,
das erste Bestimmungsmodul, weiter konfiguriert, um zu bestimmen, dass die Übertragungsleistung des Uplinkkanals des Terminals in folgenden Schlitzen des laufenden TTI reduziert werden kann, wenn die ersten Daten Uplink HS-DPCCH ACK-Domänendaten für die HSDPA-Daten einschließen, wenn die HSDPA-Daten an den Terminal im ersten Teil der Schlitze am Ende des ersten Teils von Schlitzen übertragen wurden; und
das erstes Steuermodul konfiguriert ist, um den Terminal zu steuern, um die Übertragungsleisgtung des Uplinkkanals des Terminals vor dem Ende des ersten Schlitzes in den folgenden Schlitzen zu reduzieren, wenn das erste Bestimmungsmodul bestimmt, dass die Übertragungsleistung des Uplinkkanals des Terminals in folgenden Schlitzen des laufenden TTI reduziert werden kann.

11. Vorrichtung nach Anspruch 10, wobei der erste Schlitz früher als der letzte Schlitz des TTI ist und das erste Steuermodul konfiguriert ist, um den Terminal zu steuern, um die Übertragungsleistung des Uplinkkanals des Terminals vor dem Ende des ersten Schlitzes zu reduzieren und die Übertragungsleisgtung des Uplinkkanals des Terminals nach dem ersten Schlitz vor dem Ende des TTI zu erhöhen.

12. Vorrichtung nach Anspruch 10, wobei die ersten Daten Daten eines Uplinksteuerkanal des Terminals umfassen und das erste Bestimmungsmodul konfiguriert ist, um zu bestimmen, ob eine Übertragung auf einen Uplinkdatenkanal des Terminals im TTI gemäß den Daten des Uplinksteuerkanals des Terminals am Ende des ersten Teils von Schlitzen durchgeführt wird, und falls NEIN, Bestimmen, dass die Übertragungsleistung des Uplinkkanals des Terminals in folgenden Schlitzen des laufenden TTI reduziert wird.

13. Vorrichtung nach Anspruch 10, wobei die ersten Daten Daten eines Uplinksteuerkanal des Terminals und Daten eines Uplinkdatenkanals des Terminals umfassen, und das erste Bestimmungsmodul konfiguriert ist, um zu bestimmen, ob die Daten des Uplinkdatenkanals des Terminals erfolgreich gemäß den ersten Daten am Ende des ersten Teils von Schlitzen dekodiert werden, und falls JA, Bestimmen, dass die Übertragungsleistung des Uplinkkanals des Terminals in folgenden Schlitzen des laufenden TTI reduziert wird.

14. Vorrichtung nach Anspruch 10, wobei wenn bestimmt wird, dass die Übertragungsleistung des Uplinkkanals des Terminals in folgenden Schlitzen des laufenden TTI gemäß ersten Daten am Ende des ersten Teils von Schlitzen reduziert werden kann,
das erste Bestimmungsmodul weiter konfiguriert ist, um zu bestimmen, ob eine Downlinkkanal-Feedbackanzeige erhalten werden muss, und falls JA, Erhalten der Downlinkkanal-Feedbackanzeige vor dem Ende des ersten Schlitzes, und
das erste Steuermodul konfiguriert ist, um den Terminal zu steuern, um die Übertragungsleistung des Uplinkkanals des Terminals vor dem Ende des ersten Schlitzes in den folgenden Schlitzen zu reduzieren, wenn bestimmt wird, dass die Downlinkkanal-Feedbackanzeige nicht erhalten werden muss.

**15.** Vorrichtung nach Anspruch 10, wobei das erste Steuermodul konfiguriert ist, um den Terminal zu steuern, um die Übertragungsleistung des Uplinkkanals des Terminals vor dem Ende des ersten Schlitzes, nachdem eine Downlinkkanal-Feedbackanzeige erhalten wurde, zu reduzieren.

**16.** Vorrichtung nach Anspruch 10, weiter umfassend:

ein zweites Steuermodul, das konfiguriert ist um, am Ende des ersten Schlitzes, den Terminal zu steuern, um die Übertragungsleistung des Uplinkkanals des Terminal zu erhöhen, bevor die Downlinkkanal-Feedbackanzeige übertragen wird.

**17.** Computerspeichermedium, in dem eine Computer-ausführbare Anweisung gespeichert ist, wobei die Computer-ausführbare Anweisung konfiguriert ist, um die folgenden Schritte durchzuführen:

an einem Ende des ersten Teils von Schlitzen eines laufenden Transmission Time Interval, TTI, Bestimmen, ob die Übertragungsleistung von einem Uplinkkanal eines Terminals in folgenden Schlitzen des laufenden TTI gemäß ersten Daten reduziert werden kann, die im ersten Teil von Schlitzen des TTI des Uplinkkanals des Terminals erhalten wurden; und falls JA, steuern des Terminals, um die Übertragungsleistung des Uplinkkanals des Terminals vor dem Ende eines ersten Schlitzes in den folgenden Schlitzen zu reduzieren; und Bestimmen, ob die Übertragungsleistung von einem Uplinkkanal eines Terminals in folgenden Schlitzen des laufenden TTI gemäß den ersten Daten reduziert werden kann, folgendes umfasst:

Bestimmen, ob die ersten Daten Uplink HS-DPCCH ACK-Domänendaten für die HSDPA-Daten einschließen, wenn die HSDPA-Daten an den Terminal im ersten Teil der Schlitze am Ende des ersten Teils von Schlitzen übertragen wurden.

**Revendications**

**1.** Procédé de commande de puissance exécuté par une station de base, dans lequel le procédé comprend les étapes ci-dessous consistant à :

à la fin d'une première partie de tranches d'un intervalle de temps de transmission, TTI, en cours, déterminer (101) si la puissance de transmission d'un canal de liaison montante d'un terminal peut être réduite dans les tranches subséquentes de l'intervalle TTI en cours selon des premières données reçues dans la première partie de tranches de l'intervalle TTI du canal de liaison montante du terminal ; et, dans l'affirmative, commander (102) au terminal de réduire la puissance de transmission du canal de liaison montante du terminal avant la fin d'une première tranche dans les tranches subséquentes ; et l'étape consistant à déterminer (101) si la puissance de transmission d'un canal de liaison montante d'un terminal peut être réduite dans les tranches subséquentes de l'intervalle TTI en cours selon des premières données comprend les étapes ci-dessous consistant à :

déterminer si les premières données incluent des données de domaine HS-DPCCH ACK de liaison montante pour les données d'accès HSDPA lorsque les données d'accès HSDPA ont été transmises au terminal dans la première partie de tranches à la fin de la première partie de tranches.

**2.** Procédé selon la revendication 1, dans lequel la première tranche est antérieure à la dernière tranche de l'intervalle TTI, et l'étape de commande comprend l'étape ci-dessous consistant à :

commander au terminal de réduire la puissance de transmission du canal de liaison montante du terminal avant la fin de la première tranche et d'augmenter la puissance de transmission du canal de liaison montante du terminal après la première tranche et avant la fin de l'intervalle TTI.

**3.** Procédé selon la revendication 1, dans lequel les premières données comprennent des données d'un canal de commande de liaison montante du terminal ; et dans lequel l'étape de détermination comprend l'étape ci-dessous consistant à :

déterminer s'il existe une transmission mise en oeuvre sur un canal de données de liaison montante du terminal dans l'intervalle TTI selon les données du canal de commande de liaison montante du terminal à la fin de la première partie de tranches, et dans la négative, déterminer que la puissance de transmission du canal de liaison montante du terminal est réduite dans les tranches subséquentes de l'intervalle TTI en cours.

4. Procédé selon la revendication 1, dans lequel les premières données comprennent des données d'un canal de commande de liaison montante du terminal et des données d'un canal de données de liaison montante du terminal ; et dans lequel l'étape de détermination comprend l'étape ci-dessous consistant à :

déterminer si les données du canal de données de liaison montante du terminal sont décodées correctement selon les premières données à la fin de la première partie de tranches et, dans l'affirmative, déterminer que la puissance de transmission du canal de liaison montante du terminal est réduite dans les tranches subséquentes de l'intervalle TTI en cours.

5. Procédé selon la revendication 4, dans lequel l'étape de détermination comprend les étapes ci-dessous consistant à :

déterminer si une transmission est mise en oeuvre sur un canal de données de liaison montante du terminal dans l'intervalle TTI selon les données du canal de commande de liaison montante du terminal à la fin de la première partie de tranches ; et
décoder les données du canal de données de liaison montante du terminal lorsqu'il existe une transmission mise en oeuvre sur le canal de données de liaison montante du terminal dans l'intervalle TTI, et lorsque le décodage est réussi, déterminer que la puissance de transmission du canal de liaison montante du terminal est réduite dans les tranches subséquentes de l'intervalle TTI en cours.

6. Procédé selon la revendication 4, comprenant en outre les étapes ci-dessous consistant à :

déterminer si des données reçues dans les premières P tranches de la première partie de tranches du canal de données de liaison montante du terminal sont décodées correctement selon des données reçues dans les premières P tranches du canal de liaison montante du terminal à la fin des premières P tranches, dans l'affirmative, commander au terminal de réduire la puissance de transmission du canal de liaison montante du terminal avant la fin d'une seconde tranche de l'intervalle TTI, et dans la négative, mettre en oeuvre l'étape de détermination ;
dans lequel « P » est un nombre naturel, et est inférieur au nombre de tranches dans la première partie de tranches, et la seconde tranche est antérieure à la première tranche.

7. Procédé selon la revendication 1, dans lequel, après avoir déterminé que la puissance de transmission du canal de liaison montante du terminal peut être réduite dans des tranches subséquentes de l'intervalle TTI en cours, le procédé comprend en outre les étapes ci-dessous consistant à :

déterminer si un indicateur de rétroaction de canal de liaison descendante doit être reçu ; et
dans la négative, mettre en oeuvre l'étape de commande avant la fin de la première tranche ; et
dans l'affirmative, recevoir l'indicateur de rétroaction de canal de liaison descendante avant la fin de la première tranche.

8. Procédé selon la revendication 1, dans lequel l'étape de commande comprend l'étape ci-dessous consistant à :

commander au terminal de réduire la puissance de transmission du canal de liaison montante du terminal avant la fin de la première tranche et après la réception d'un indicateur de rétroaction de canal de liaison descendante.

9. Procédé selon la revendication 1, comprenant en outre l'étape ci-dessous consistant à, à la fin de la première tranche :

commander au terminal d'augmenter la puissance de transmission du canal de liaison montante du terminal avant la transmission d'un indicateur de rétroaction de canal de liaison descendante.

10. Station de base, comprenant un dispositif de commande de puissance, dans lequel le dispositif de commande de puissance comprend : un premier module de détermination, configuré de manière à déterminer si la puissance de transmission d'un canal de liaison montante d'un terminal peut être réduite dans des tranches subséquentes d'un intervalle de temps de transmission, TTI, en cours, selon des premières données reçues dans une première partie de tranches de l'intervalle TTI du canal de liaison montante du terminal à la fin d'une première partie de tranches de l'intervalle TTI en cours ; et

dans lequel le premier module de détermination est en outre configuré de manière à déterminer que la puissance de transmission du canal de liaison montante du terminal peut être réduite dans des tranches subséquentes de l'intervalle TTI en cours, si les premières données incluent des données de domaine HS-DPCCH ACK de liaison montante pour les données d'accès HSDPA lorsque les données d'accès HSDPA ont été transmises au terminal dans la première partie de tranches à la fin de la première partie de tranches ; et
un premier module de commande configuré de manière à commander au terminal de réduire la puissance de transmission du canal de liaison montante du terminal avant la fin de la première tranche dans les tranches subséquentes, si le premier module de détermination détermine que la puissance de transmission du canal de liaison montante du terminal peut être réduite dans les tranches subséquentes de l'intervalle TTI en cours.

11. Dispositif selon la revendication 10, dans lequel la première tranche est antérieure à la dernière tranche de l'intervalle TTI, et le premier module de commande est configuré de manière à commander au terminal de réduire la puissance de transmission du canal de liaison montante du terminal avant la fin de la première tranche, et à augmenter la puissance de transmission du canal de liaison montante du terminal après la première tranche et avant la fin de l'intervalle TTI.

12. Dispositif selon la revendication 10, dans lequel les premières données comprennent des données d'un canal de commande de liaison montante du terminal, et le premier module de détermination est configuré de manière à déterminer s'il existe une transmission mise en oeuvre sur un canal de données de liaison montante du terminal dans l'intervalle TTI selon les données du canal de commande de liaison montante du terminal à la fin de la première partie de tranches, et dans la négative, à déterminer que la puissance de transmission du canal de liaison montante du terminal est réduite dans les tranches subséquentes de l'intervalle TTI en cours.

13. Dispositif selon la revendication 10, dans lequel les premières données comprennent des données d'un canal de commande de liaison montante du terminal et des données d'un canal de données de liaison montante du terminal, et le premier module de détermination est configuré de manière à déterminer si les données du canal de données de liaison montante du terminal sont décodées correctement selon les premières données à la fin de la première partie de tranches, et dans l'affirmative, à déterminer que la puissance de transmission du canal de liaison montante du terminal est réduite dans les tranches subséquentes de l'intervalle TTI.

14. Dispositif selon la revendication 10, dans lequel, lorsqu'il est déterminé que la puissance de transmission du canal de liaison montante du terminal peut être réduite dans les tranches subséquentes de l'intervalle TTI selon les premières données à la fin de la première partie de tranches :

le premier module de détermination est en outre configuré de manière à déterminer si un indicateur de rétroaction de canal de liaison descendante doit être reçu et, dans l'affirmative, à recevoir l'indicateur de rétroaction de canal de liaison descendante avant la fin de la première tranche ; et
le premier module de commande est configuré de manière à commander au terminal de réduire la puissance de transmission du canal de liaison montante du terminal avant la fin de la première tranche dans les tranches subséquentes s'il est déterminé que l'indicateur de rétroaction de canal de liaison descendante ne doit pas être reçu.

15. Dispositif selon la revendication 10, dans lequel le premier module de commande est configuré de manière à commander au terminal de réduire la puissance de transmission du canal de liaison montante du terminal avant la fin de la première tranche après la réception d'un indicateur de rétroaction de canal de liaison descendante.

16. Dispositif selon la revendication 10, comprenant en outre :

un second module de commande, configuré de manière à, à la fin de la première tranche, commander au terminal d'augmenter la puissance de transmission du canal de liaison montante du terminal avant la transmission de l'indicateur de rétroaction de canal de liaison descendante.

17. Support de stockage informatique, dans lequel est stockée une instruction exécutable par ordinateur, dans lequel l'instruction exécutable par ordinateur est configurée de manière à exécuter les étapes ci-dessous comme suit :

à la fin d'une première partie de tranches d'un intervalle de temps de transmission (TTI) en cours, déterminer si la puissance de transmission d'un canal de liaison montante d'un terminal peut être réduite dans des tranches subséquentes de l'intervalle TT en cours, selon des premières données reçues dans la première partie de tranches de l'intervalle TTI du canal de liaison montante du terminal, et ; dans l'affirmative, commander au terminal de réduire la puissance de transmission du canal de liaison montante du terminal avant la fin d'une première tranche dans les tranches subséquentes ; et

dans lequel l'étape consistant à déterminer si la puissance de transmission d'un canal de liaison montante d'un terminal peut être réduite dans des tranches subséquentes de l'intervalle TTI en cours selon des premières données comprend l'étape ci-dessous consistant à :

déterminer si les premières données incluent des données de domaine HS-DPCCH ACK de liaison montante pour les données d'accès HSDPA, lorsque les données d'accès HSDPA ont été transmises au terminal dans la première partie de tranches à la fin de la première partie de tranches.

Fig. 1

A first determination step: at the end of a first part of slots of a current Transmission Time Interval (TTI), it is determined whether transmitting power of an uplink channel of a terminal is allowed to be reduced in subsequent slots of a current TTI according to first data, received in a first part of slots of the TTI, of the uplink channel of the terminal at the end of the first part of slots of the current TTI, and if YES, enter a control step

101

The control step: the terminal is controlled to reduce the transmitting power of the uplink channel of the terminal before the end of a first slot in the subsequent slots

102

Fig. 2

A base station receives and caches data of an uplink channel, a power control parameter and/or data of a downlink channel of a terminal

201

The base station performs advanced decoding on an uplink control channel in the first M slots of a current TTI, and determines whether the TTI is in an empty packet state; and/ or the base station performs advanced decoding on the uplink data channel in the first M slots which are non-empty packets, and determines whether the decoding is successfully performed in the TTI

202

The base station reduces transmitting power of an uplink channel which is in the empty packet state or is successfully decoded in subsequent slots of the TTI, and increases the transmitting power of the uplink channel in N slots before the end of the TTI

203

Fig. 3

R99 12.2K+2.5K, advanced decoding, AWGN,
simulated frame number: 2000

Fig. 4

R99 12.2K+2.5K, advanced decoding, AWGN,
simulated frame number: 2000

Block
error
rate

Energy/band limited white noise power spectral density
E c/N0 unit: dB

Fig. 5

An empty packet of TFCI=0
is detected M slots in
advance, and
SirTarget_R99 is reduced

SirTarget_R99 is
increased N slots in
advance

Base station, uplink
DPCCH

Base station, uplink
DPDCH

SirTarget

Node B, uplink
SirTarget_R99

DeltaSir_R99
_Down

DeltaSir_R99_Up

T_R99_Down

T_R99_Up

Time

DPCCH

The DPDCH has
data

The DPDCH does not
have data

Fig. 6

Identifying an RR9 TTI type — 601

Performing TFCI decoding on each frame M slots in advance — 602

Determining whether the decoded TFCIs of M continuous slots are 0 — 603

NO → Determining that the TTI is a non-empty packet, and decoding an uplink DPDCH in advance — 605

YES ↓

Determining that the TTI is an empty packet, reducing SirTarget_R99, and increasing SirTarget_R99 in the N slots before the end of the TTI — 604

Fig. 7

Node B, uplink DPCCH

Node B, uplink E-DPCCH

Detecting an SIR of the E-DPCCH in M continuous slots, and performing empty packet determination

Increasing SirTarget_EDPCCH N slots in advance

Node B, an uplink E-DPDCH

Node B, uplink SirTarget_EDPCCH

SirTarget

DeltaSir_EDPCCH_Dwon

DeltaSir_EDPCCH_Up

T_HSUPA_EDPCCH_Down

T_HSUPA_EDPCCH_Up

Time

DPCCH    The E-DPDCH has data    The E-DPDCH does not have data    E-DPCCH

Fig. 8

```
┌─────────────────────────────────────┐
│                                      │   801
│   Determining an HSUPA TTI type      │  ⌇
│                                      │
└─────────────────────────────────────┘
                    │
                    ▼
                                               807
           802                              ⌇
        ╱─────────────────╲                 ┌─────────────────┐
      ╱  Determining whether the ╲    NO    │ Not performing  │
     ⟨   current TTI type is a 10ms TTI ⟩ ──────────▶│ empty packet    │
      ╲                         ╱           │   detection     │
        ╲─────────────────╱                 └─────────────────┘
                    │
                  YES
                    │
                    ▼
┌─────────────────────────────────────┐
│   Detecting an SIR of an E-DPCCH in  │   803
│   M continuous slots of each frame   │  ⌇
└─────────────────────────────────────┘
                    │
                    ▼
                                                           805
           804                                          ⌇
        ╱─────────────────╲                 ┌──────────────────────────┐
      ╱  Determining whether the SIR of the ╲   YES  │ Determining that the TTI is│
     ⟨   E-DPCCH in the M continuous slots ⟩ ──────▶│ a non-empty packet, and    │
      ╲   exceeds a preset threshold value ╱         │   keeping SirTarget-       │
        ╲─────────────────╱                 │   EDPCCH unchanged       │
                    │                                 └──────────────────────────┘
                   NO
                    │
                    ▼
┌─────────────────────────────────────┐
│  Determining that the TTI is an empty │
│  packet, reducing                     │   806
│  SirTarget_EDPCCH, and increasing     │  ⌇
│  SirTarget_EDPCCH in the N slots      │
│  before the end of the TTI            │
└─────────────────────────────────────┘
```

Fig. 9

Determining M slots in advance whether a
TFCI is 0, and determining whether there
is data transmitted on such a basis

Node B, uplink
DPCCH

Trying decoding for the
first time in L slots, and
supposing that a CRC is
wrong

Node B, an
uplink DPDCH

Trying decoding again in
K slots, and supposing
that the CRC is correct

Increasing SirTarget_Data
N slots in advance

SirTarget

Node B, uplink
SirTarget_Data

DeltaSir_Data_Down

DeltaSir_Data_Up

Time

T_Data_The first
decoder

T_Data_Down

T_Data_Up

DPCCH

The DPDCH
has data

Fig. 10

Identifying an R99 TTI type ⟋1001

Decoding a TFCI M slots in advance in each frame ⟋1002

Determining whether the decoded TFCI of the M slots is 0 ⟋1003 — YES → Performing empty packet detection on an uplink DPDCH ⟋1004

NO

Determining that the TTI is a non-empty packet, trying decoding for the first time in the Lth slot, and supposing that a CRC is wrong ⟋1005

Trying decoding for the second time in the Kth slot, and supposing that the CRC is correct ⟋1006

Reducing SirTarget_Data, and increasing SirTarget_Data in the N slots before the end of the TTI ⟋1007

Fig. 11

Node B, uplink DPCCH

Node B, uplink HS-DPCCH

Node B, HS-DSCH

If a certain HS-DSCH is required to be scheduled, performing scheduling after a delay of M slots, and simultaneously increasing SirTarget_DPA

7.5 slots

Maintaining SirTarget_DPA in N slots after DPA data is transmitted

Node B HS-PDSCH

SirTarget

Node B, SirTarget_DPA

DeltaSir_DPA_Up

DeltaSir_DPA_Down

DeltaSir_DPA_Up

Time

T_HSDPA_Down

T_HSDPA_Up

DPCCH    HS-DSCH    HS-PDSCH    CQI    ACK

Fig. 12

A scheduler detects an HS-
DSCH scheduling requirement of
a terminal — 1201

Does a current subframe have
a scheduling requirement — 1202

NO → Current
SirTarget_DPA is
maintained — 1203

YES

Is it currently in a reduced
SirTarget_DPA state — 1204

NO → The current
SirTarget_DPA is
maintained — 1205

YES

SirTarget_DPA is increased, and
the terminal is scheduled after a
delay of M slots — 1206

The terminal is scheduled when
M slots elapse, and transmission
time over an HS-PDSCH is
determined — 1207

After transmission is performed
over the HS-PDSCH for N slots,
SirTarget_DPA is reduced — 1208

Fig. 13

```
                                    ┌──────────────────────────┐
                                    │                      ╮130 │
                                    │                      ╯    │
                    │               │                           │
                    ▼               │                           │
              ┌─────────────┐       │                           │
              │ Receiving and│ ╮1301 │                          │
              │ caching unit │ ╯     │                           │
              └─────────────┘       │                           │
                    │               │                           │
                    ▼               │                           │
              ┌─────────────┐       │                           │
              │  Advanced    │ ╮1302 │                          │
              │ decoding unit│ ╯     │                           │
              └─────────────┘       │                           │
                    │               │                           │
                    ▼               │                           │
              ┌─────────────┐       │                           │
              │ Power control│ ╮1303 │                          │
              │    unit      │ ╯     │                           │
              └─────────────┘       │                           │
                    │               │                           │
                    ▼               └──────────────────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070201350 A1
- WO 2012048717 A1